# EUROPÄISCHE PATENTSCHRIFT

(11) **EP 0 906 161 B1**
(45) Veröffentlichungstag und Bekanntmachung des Hinweises auf die Patenterteilung: **12.07.2000**
(21) Anmeldenummer: 97927025.3
(22) Anmeldetag: 22.05.1997
(51) Int. Cl.: B21D 43/10

(54) **BEARBEITUNGSMASCHINE FÜR PLATTENFÖRMIGE WERKSTÜCKE, INSBESONDERE ZUR ERZEUGUNG VON GEBOGENEN RÄNDERN AN BLECHTEILEN**
SHAPING MACHINE FOR SHEET-LIKE WORKPIECES, ESPECIALLY FOR BENDING THE EDGES OF SHEET-STEEL COMPONENTS
MACHINE D'USINAGE POUR PIECES SOUS FORME DE PLAQUES, NOTAMMENT POUR PRODUIRE DES BORDS PLIES SUR DES PIECES EN TOLE

(30) Priorität: 30.05.1996 DE 19621658
(43) Veröffentlichungstag der Anmeldung: 07.04.1999
(73) Patentinhaber: EHT Werkzeugmaschinen GmbH, 79331 Teningen (DE)
(72) Erfinder: FETSCH, Heinz, D-77955 Ettenheim (DE); KALTENBACH, Hermann, D-79194 Gundelfingen (DE); PFLEIDERER, Walter, D-79331 Teningen (DE)
(74) Vertreter: Schmitt, Hans, Dipl.-Ing.
(86) Internationale Anmeldenummer: EP9702609
(87) Internationale Veröffentlichungsnummer: WO9746339

(56) Entgegenhaltungen:
- EP-A- 0 115 602
- DE-A- 2 839 978
- US-A- 4 510 785
- US-A- 4 557 135
- US-A- 4 573 861
- US-A- 5 187 958

## Beschreibung

Die Erfindung betrifft eine Biegemaschine für plattenförmige Werkstücke, zur Erzeugung von gebogenen Rändern mit einer horizontalen Werkstückauflage und mit einem Biegebalken aufweisenden Biegewerkzeug sowie mit einem nahe dem Biegewerkzeug angeordneten Niederhalter für das Werkstück, wobei die Biegemaschine wenigstens einen Manipulator mit einer Klemmzange zum Erfassen des Werkstückes aufweist, welche Klemmzange einen Untergriff und einen insbesondere demgegenüber in Gebrauchsstellung vertikal bewegbaren Obergriff aufweist und etwa in der Ebene des Werkstückes oder in einer Parallelebene dazu quer oder rechtwinklig zu dem Niederhalter des Werkstückes oder quer oder rechtwinklig zu dem Werkzeug bewegbar ist und eine Drehung des Werkstückes um eine vertikale Achse ermöglicht.

Eine derartige Biegemaschine ist aus DE 28 39 978 B2 bekannt. Sie dient dazu, an Blechteilen mit einer in der Regel rechteckigen Form gebogene Kanten anzubringen. Die Klemmzange ist dabei auf einem horizontal unterhalb der Werkstückauflage und des Werkstückes geführten Schlitten quer bzw. rechtwinklig zu der Biegelinie, also zu dem zu bearbeitenden Werkstückrand bzw. quer oder rechtwinklig zu dem Werkzeug verfahrbar. Sie kann also eine zuvor in diese Klemmzange eingesetzte Blechtafel als Werkstück dem Biegewerkzeug zuführen und aufgrund der Drehbarkeit eine Veränderung der Lage des Werkstückes in seiner Bearbeitungsebene zulassen. Dabei kann der Obergriff angehoben werden, so daß die Klemmzange nach einem Biegevorgang von der gebogenen Kante wegbewegt werden kann, so daß das zuvor bearbeitete Werkstück freigegeben wird. Es muß dann allerdings mit einer weiteren Entnahmevorrichtung von der Klemmzange oder aus der Biegemaschine entnommen werden. In gleicher Weise muß auch die Zuführung in die Klemmzange mit dieser selbst oder mit einer anderen Vorrichtung oder von Hand erfolgen.

Durch diese Konstruktion ergibt sich eine beschränkte Zuführ- und Umsetzmöglichkeit und ferner muß auch die Entnahme eines fertig bearbeiteten Werkstückes das Vorhandensein der Klemmzange und ihres Schlittens berücksichtigen, d.h. die Entnahme ist durch den Manipulator und seine Lagerung unterhalb der Werkstückauflage eingeschränkt. Ferner ist durch diese vorbekannte Konstruktion für eine rationelle Bearbeitung notwendig, daß ein Werkstück in seinem Zentrum erfaßt wird, weil anderenfalls beim Wechseln von einer Bearbeitungskante zur nächsten, d.h. bei der Drehung des Werkstückes, unter Umständen ein Öffnen der Klemmzange und eine relative Verschiebung zwischen Klemmzange und Werkstück erforderlich wird, um in unterschiedlichen Richtungen verschiedene Abmessungen des Werkstückes berücksichtigen zu können. Demgemäß müssen auch die Biegewerkzeuge symmetrisch zu der Bewegungsachse der Klemmzange angeordnet sein.

Aus der US-A-5 187 558 ist eine Bearbeitungsmaschine anderer Gattung, nämlich eine Gesenkbiegepresse, bekannt. Zusätzlich ist darin auch eine Biegemaschine oder eine Schermaschine erwähnt, aber nicht näher beschrieben. Bei einer Gesenkbiegepresse ist ein Niederhalter nicht vorgesehen, weil die Blechränder bei der Verformung gegenüber dem Gesenk hochgebogen werden, sich also relativ zu dem Werkzeug aufwärts bewegen. Ein zum Zuführen und Positionieren des Werkstückes dienender Manipulator ist bei dieser vorbekannten Lösung ebenfalls unterhalb der Werkstückebene geführt verschiebbar und muß das Werkstück freigeben, wenn dieses verformt wird und er den Verformungsbewegungen des Werkstückes nicht folgen soll.

Es besteht deshalb die Aufgabe, eine Biegemaschine der eingangs genannten Art zu schaffen, mit welcher ein Werkstück an beliebiger Stelle, also auch außerhalb seines Zentrums, erfaßt und dann dem Werkzeug zugeführt werden kann, wobei zusätzliche Zuführ-, Umsetz- und Entnahmevorrichtungen vermieden werden sollen und die Bearbeitung innerhalb der Biegemaschine an verschiedenen Stellen des Werkzeuges erfolgen kann insbesondere, wenn das oder die Werkzeuge geteilt sind.

Zur Lösung dieser Aufgabe ist die Biegemaschine der eingangs genannten Art dadurch gekennzeichnet, daß der Manipulator oberhalb der Bearbeitungsebene des Werkstückes angeordnet und gelagert ist und daß die Klemmzange zusätzlich zu ihrer quer oder rechtwinklig zu dem Niederhalter orientierten Verschiebbarkeit auch parallel zu diesem Niederhalter verstellbar und um eine rechtwinklig zur Werkstückebene verlaufende Achse drehbar gelagert ist.

Der Manipulator ist also oberhalb der Werkstückebene und der Werkstückauflage angeordnet, so daß er die Zufuhr und die Entnahme des Werkstückes nicht beschränkt oder behindert. Dabei hat in vorteilhafter Weise die Klemmzange dieses oberhalb der Biegemaschine befindlichen Manipulators zusätzliche Bewegungsmöglichkeiten, so daß sie selbst dazu herangezogen werden kann, ein Werkstück von einem Vorratsstapel abzunehmen und der Biegemaschine zuzuführen und dabei auch in eine gewünschte genaue Lage oder Position zu bringen. Ferner kann die Klemmzange nach einer ersten Bearbeitung durch ihre Drehbewegung, die unter Umständen mit einer parallel zu einem Biegewerkzeug erfolgenden Verschiebebewegung gekoppelt sein kann, das Werkstück in eine neue Bearbeitungslage zu bringen, ohne daß zusätzliche Hilfsmittel eingesetzt werden müssen und ohne daß dabei die Klemmzange das genaue Zentrum des Werkstückes erfaßt. Schließlich kann mit der Klemmzange das Werkstück nach seiner Bearbeitung auch wieder aus der Biegemaschine entnommen und abgelegt werden. Dabei ergibt sich durch die Anordnung oberhalb der Werkstückauflage, also die Aufhängung des Manipulators und der Klemmzange von oben der Vorteil, daß Werkstücke von nahezu beliebiger Größe erfaßt, zugeführt und bearbeitet sowie wieder entnommen werden können und daß diese Werkstücke an verschiedenen Stellen innerhalb der Biegemaschine im Bereich entsprechender dort angeordneter Werkzeuge zugeführt und bearbeitet werden können, also die Zuführung nicht mehr starr von einer auf das Zentrum der Maschine gerichteten Schlittenführung abhängig ist.

Ein weiterer Vorteil der erfindungsgemäßen Anordnung ist darin zu sehen, daß im gesamten Bewegungsbereich der Klemmzange mit deren Hilfe mehrere Abnahmestellen für entsprechende Werkstücke bedient werden können und ebenso die Ablage der fertig bearbeiteten Werkstücke an mehreren Stellen erfolgen kann, so daß aufgrund der erfindungsgemäßen Gestaltung und Anordnung des Manipulators eine Verteilung der Werkstücke je nach Bedarf beispielsweise für eine Weiterverarbeitung erfolgen kann. Dabei können in vorteilhafter Weise die Werkstücke sogar mit Hilfe der Klemmzange aus einer als Biegemaschine gestalteten Bearbeitungsmaschine herausbewegt werden, bei denen ein Rand, insbesondere der zuletzt bearbeitete Rand gegenüber der horizontalen Orientierung des Werkstückes nach unten gebogen ist, weil mit Hilfe der parallel zur Biegekante möglichen Bewegung des Manipulators oder der Klemmzange auch ein solches Werkstück seitlich aus der Biegemaschine herausbewegt werden kann, sofern die quer zu dieser Bewegung angeordneten Ränder nach oben oder gar nicht gebogen sind.

Eine Ausgestaltung der Erfindung von erheblicher Bedeutung, die ein Ausheben von Werkstücken mit nach unten gebogenen umlaufenden Rändern ermöglicht, kann darin bestehen, daß die Klemmzange an dem Manipulator und/oder der Obergriff der Klemmzange und/oder der gesamte Manipulator in einer Richtung rechtwinklig zur Bearbeitungsebene verstellbar, insbesondere nach oben anhebbar ist. Dies hat den zusätzlichen Vorteil, daß auch Werkstücke bearbeitet werden können, die in ihrem mittleren Bereich nicht eben, sondern mit Erhebungen oder Absenkungen versehen sind, so daß die dort angreifende Klemmzange eine andere Höhenlage während der Bearbeitung einnehmen muß, als wenn ein glattes und ebenes Werkstück zu erfassen ist. Außerdem lassen sich Werkstücke mit relativ großen inneren Durchbrüchen von innen her ergreifen und positionieren.

Aufgrund der erläuterten unterschiedlichen Bewegungsmöglichkeiten des Manipulators kann die Biegemaschine eine oder mehrere Abnahmestellen für plattenförmige Werkstücke aufweisen, die innerhalb des Verschiebebereiches des Manipulators und/oder der Klemmzange angeordnet sind und die jeweiligen Werkstücke insbesondere in schon ausgerichteter Positionierung enthalten. Da der Manipulator in mehreren Richtungen verschiebbar ist, kann er einen relativ großen Bereich überstreichen, so daß in vorteilhafter Weise mehrere Abnahmestellen für plattenförmige Werkstücke in diesem Bereich untergebracht werden können, um beispielsweise verschieden große Werkstücke oder eine größere Zahl von Werkstücken bereitstellen zu können, als es mit nur einer Abnahmestelle möglich wäre. Dennoch können die Werkstücke von diesen Abnahmestellen aus direkt mit der Klemmzange des Manipulators erfaßt und ihrer Bearbeitung in der Biegemaschine zugeführt werden, weil sie an ihrer Abnahmestelle schon vorpositioniert sein können.

Eine besonders zweckmäßige Ausgestaltung der Erfindung ermöglicht es, ein an seinen Rändern gebogenes Werkstück oder Blechteil auf einfache Weise aus der Klemmzange lösen zu können oder mit der Klemmzange an einem teilweise gebogenen Blechteil randseitig angreifen zu können, wobei die Klemmzange einen schon gebogenen Randbereich übergreifen können muß. Dies kann bei dieser Ausgestaltung der Erfindung dadurch erreicht werden, daß der Obergriff gegenüber dem Untergriff der Klemmzange einen Freiraum zum Umgreifen auch eines profilierten Randes des Werkstückes bei geschlossener Klemmzange aufweist und daß der Untergriff zum Öffnen dieses Freiraumes relativ zu der Schließlage aus dem Bereich des Obergriffes und dieses Freiraumes wegbewegbar ist. Dadurch kann zwischen Obergriff und Untergriff ein so großer Abstand als untere öffnung des Freiraumes gebildet werden, daß die Klemmzange gegenüber einem hochstehenden, nach außen gebogenen Rand nach oben angehoben werden kann, um das Werkstück freizugeben. Umgekehrt kann sie so von oben her über einen gebogenen Rand in das Werkstück eingeführt werden und dieses trotz eines gebogenen Randes erfassen, was beispielsweise während eines mehrfachen Biegens und Umsetzens eines Werkstückes in der Bearbeitungs- oder Biegemaschine sehr nützlich sein kann.

Der Untergriff kann zum Freigeben des Werkstückes und des Freiraumes gegenüber dem Obergriff in horizontaler Richtung um eine vertikale Achse seitlich des Freiraumes verschwenkbar oder insgesamt etwa parallel zu dem Werkstück verschiebbar sein. Besonders zweckmäßig ist die horizontale Verschiebbarkeit des Untergriffes gegenüber dem Obergriff, wodurch zwischen dem Untergriff und dem Obergriff der erwähnte Abstand geschaffen wird, trotzdem aber innerhalb der für diese Verschiebung erforderlichen Führung eine gute Übertragung der Klemmkraft bei aufeinanderdrückenden Unter- und Obergriff ermöglicht wird. Darüber hinaus wird auf diese Weise kein Freiraum für eine Schwenkbewegung benötigt. An dem Manipulator ist außerdem genügend Platz, um den Untergriff und ein mit ihm verbundenes, den Freiraum begrenzendes Teil führen und verschieben zu können.

Der Obergriff kann gegenüber dem Untergriff, insbesondere gegenüber dem in horizontaler Richtung zum öffnen verschiebbaren Untergriff, zur Erzeugung einer Klemmkraft vertikal bewegbar sein. Somit kann der Untergriff zunächst in seine Halteposition gebracht werden, in der sich ein Werkstück zwischen ihm und dem Obergriff befindet, wonach dann der Obergriff für die eigentliche Klemmbewegung geringfügig nach unten bewegt werden kann.

Um auch relativ große Werkstücke mit genügender Sicherheit und Genauigkeit erfassen, halten und bewegen zu können, ist es vorteilhaft, wenn die Klemmzange wenigstens zwei beabstandete Klemmstellen hat. Dadurch können an zwei beabstandeten Stellen jeweils Klemmkräfte aufgebracht werden, wodurch eine Verbesserung der Handhabung der Werkstücke auch bei einer Verdrehung erreicht werden kann.

Besonders zweckmäßig ist es dabei, wenn der Obergriff des Manipulators aus wenigstens zwei in vertikaler Richtung für das Spannen und Lösen bewegbaren Klemmstempeln oder einer Klemmwippe mit zwei Klemmstellen und einem sie beaufschlagenden Klemmzylinder besteht. Dadurch können an den beiden beabstandeten Klemmstellen jeweils gezielt definierte Klemmkräfte aufgebracht werden, was mit nur einem, eventuell in seiner Wirkfläche vergrößerten, an sich auch möglichen Klemmstempel beispielsweise bei Unebenheiten oder Verunreinigungen des Werkstückes nicht mit genügender Sicherheit erreicht werden kann. Mit einer Klemmwippe können dabei die von einem Klemmzylinder aufgebrachten Klemmkräfte entsprechend gut und gleichmäßig auf die beiden Klemmstellen verteilt werden.

Der Untergriff kann eine ungeteilte Auflagefläche haben, die im Bereich des oder der Klemmstempel des Obergriffes insbesondere jeweils eine erhabene oder erhöhte Gegenfläche für den Klemmstempel haben kann. Somit entstehen auch bei einem ungeteilten Untergriff zusammen mit den Klemmstempeln jeweils etwas beabstandete Klemmstellen an einer einzigen Klemmzange.

Um an der Klemmzange den gewünschten Freiraum zwischen Untergriff und Obergriff zu schaffen und trotz der Verschiebbarkeit des Untergriffes relativ zum Obergriff in Gebrauchsstellung genügend hohe, evtl. von mehreren Klemmstempeln ausgehende Klemmkräfte übertragen zu können, ist es vorteilhaft, wenn der gegenüber dem Obergriff in horizontaler Richtung geführt verschiebbare Untergriff mit seiner Schiebeführung zusammen insgesamt einen etwa C- oder U-förmigen Umriß hat, wobei das Innere des C- oder des liegenden U zumindest einen Teil des Freiraumes der Klemmzange und der untere, in Gebrauchsstellung etwa horizontale Schenkel den eigentlichen Untergriff sowie der obere Schenkel das Führungsteil des Untergriffes und die biegesteife Verbindung des Untergriffes zu seiner Aufhängung oder Schiebelagerung bildet. Ein derartig gestalteter, etwa C- oder einem liegenden U ähnelnder Untergriff kann genügend biegesteif ausgebildet werden, um die Klemmkräfte gut zu übertragen, wobei gleichzeitig der in Gebrauchsstellung obere horizontale Schenkel eine gute Führung für die horizontale Verstellbewegung ermöglicht, also eine Doppelfunktion hat, in dem er die Verschiebbarkeit und eine gute Krafteinleitung in die Führung und damit den Manipulator erlaubt. Das den Untergriff bildende und den Freiraum im wesentlichen umschließende "C" oder "U" wird in Gebrauchsstellung an seiner Öffnung von dem Obergriff geschlossen.

Der Untergriff kann an seiner Unterseite gegenüber den Bewegungsrichtungen, die er bei seiner Verschiebung durchläuft, kufenförmig abgerundet oder abgeschrägt sein. Häufig ist nämlich die Auflage für das Werkstück mit Borsten besetzt, um eine Beschädigung der Unterseite des Werkstückes bei seiner Verschiebung oder Bewegung zu vermeiden. Bei einer Verschiebung des Untergriffes kann dieser gegenüber den Borsten besonders leicht verschoben werden, wenn er die erwähnte kufenförmige Abrundung oder Abschrägung aufweist.

Eine weitere Ausgestaltung der erfindungsgemäßen Biegemaschine mit Manipulator kann darin bestehen, daß zum Schutz bei Kollisionen mit gegebenenfalls ungewollt verformten Werkstücken Überlastungen der Schiebeführungen und Antriebe des Manipulators dadurch vermieden werden, daß der Untergriff und/oder der Obergriff der Klemmzange und/oder ihre Aufhängung wenigstens eine Sollbruchstelle bildet oder aufweist. Ist beispielsweise der an der Klemmzange befindliche Freiraum von einem Blechteil und/oder dessen gebogenem Rand völlig ausgefüllt und kollidiert dieses als Blechteil ausgebildete Werkstück bei einer Bewegung aufgrund einer nicht vorgesehenen Verformung mit dem Maschinengestell, wird dieser Stoß auf die Klemmzange und damit auf den Manipulator übertragen. Damit ein solcher Stoß in den Führungen und Antrieben keine bleibenden Verformungen oder Beschädigungen bewirken kann, wird in einem solchen Fall durch die erwähnte Sollbruchstelle ein leicht ersetzbares Teil der Klemmzange abgebrochen und dadurch die aufwendige Führung des Manipulators bzw. der entsprechende Antrieb geschützt. Die Sollbruchstelle oder die Sollbruchstellen sind also zwischen einem leicht ersetzbaren Teil der Klemmzange und den übrigen Teilen oder dem Manipulator angeordnet.

Besonders zweckmäßig ist es, wenn die Sollbruchstelle durch eine entsprechend schwache oder geschwächte Befestigungsschraube zum Anbringen des Untergriffes an der Schiebeführung oder an dem Führungsteil des Untergriffes gebildet ist. Im geschilderten Kollisionsfall wird diese Schraube brechen, die besonders einfach ersetzt werden kann.

Der Obergriff kann mit einer oder mehreren schwach bemessenen oder mit Sollbruchstellen versehenen Schrauben an seiner Halterung befestigt sein. Somit wird auch an dieser Stelle der entsprechende Schutz gegen Überlastungen bewirkt, indem im Falle einer solchen Überlastung lediglich einfach ersetzbare Schrauben brechen.

Die oberhalb der Werkstück- und Bearbeitungsebene angeordnete Aufhängung und Lagerung für den Manipulator kann mit dem Maschinengestell der Biegemaschine direkt oder indirekt verbunden sein oder einen eigenen Ständer aufweisen, der im Bereich der Aufstellfläche mit dem Maschinengestell in eine definierte Abstandslage gebracht und dort vorzugsweise fixiert ist. Somit ergeben die unter Umständen computergesteuerten Bewegungen des Manipulators mit einem Werkstück immer ganz genaue und vorgegebene Lagen innerhalb der Biegemaschine, so daß vorpositionierte Werkstücke erfaßt und mit der erforderlichen Präzision in der Biegemaschine weiterbearbeitet werden können, ohne daß an oder in der Biegemaschine selbst noch eine Positionierung durchgeführt werden muß.

Dabei können das Maschinengestell und der Halteständer für den Manipulator jeweils unabhängig voneinander feste Standorte auf einem gemeinsamen oder zwei in vorgegebenem Abstand angeordneten Fundamenten oder dergleichen haben. Vor allem bei einem mit vorgegebenem Abstand neben dem Maschinengestell installierten Halteständer für den Manipulator ist in vorteilhafter Weise eine Nachrüstung einer schon installierten Biegemaschine mit dem erfindungsgemäßen Manipulator auf relativ einfache Weise möglich, weil der Manipulator mit seinem Halteständer in einem definierten Abstand zu einer solchen Biegemaschine installiert werden kann.

Für die erfindungsgemäß vorgesehenen, einander überlagernden Bewegungsmöglichkeiten des Manipulators ist es günstig, wenn an der Biegemaschine oder dem Maschinengestell oder dem Ständer an einem horizontalen Führungsträger der insbesondere parallel zu einer Bearbeitungsseite eines Werkstückes verläuft, ein weiterer horizontaler, jedoch rechtwinklig zu diesem Führungsträger angeordneter Führungsbalken angeordnet ist, der über einen Tragschlitten mit dem Führungsträger verbunden ist und seinerseits einen horizontal verschiebbaren Verstellschlitten trägt, an dem ein vertikal verstellbarer Halteschlitten angeordnet ist, an welchem die Klemmzange drehbar gelagert ist. An dem horizontalen Führungsträger kann also der Tragschlitten mit dem von ihm gehaltenen Führungsbalken etwa parallel zu einer Bearbeitungsseite oder parallel zu einer Biegelinie einer Biegemaschine verschoben werden. Auf dem rechtwinklig dazu angeordneten Führungsbalken kann dann der Verstellschlitten ebenfalls in horizontaler Richtung, aber rechtwinklig zu der Bewegung des Tragschlittens verstellt werden, woraus sich die Möglichkeit ergibt, den vertikal verstellbaren Halteschlitten mit der daran drehbar gelagerten Klemmzange in einem Flächenbereich zu bewegen, der durch die Länge des Führungsträgers und des Führungsbalkens bestimmt ist.

Ferner ergibt sich daraus die Weiterbildungsmöglichkeit, an den Schlitten und/oder Schiebeführungen Weggeber und an der Drehlagerung der Klemmzange einen Drehgeber anzuordnen und diese Geber mit der Steuerung der Biegemaschine zu verbinden. Damit wird eine automatische und wiederholte, insbesondere auch programmiert geänderte Bewegung des Manipulators und seiner Klemmzange ermöglicht, so daß auch in nahezu beliebiger Folge unterschiedliche Werkstücke präzise erfaßt, zugeführt und bearbeitet werden können. Ferner läßt sich so eine Vorsortierung der bearbeiteten Werkstücke durchführen. Für die Verstellung der beiden horizontal verstellbaren Schlitten können spielfreie elektrische Direkt-Linearantriebe vorgesehen sein. Entsprechend genaue Bewegungen der Klemmzange können dadurch durchgeführt werden.

Eine weitere Ausgestaltung der Erfindung von erheblicher Bedeutung kann darin bestehen, daß die Biegemaschine wenigstens einen weiteren Manipulator mit Klemmzange aufweist, der insbesondere an dem gleichen Führungsträger angeordnet sein kann. Der horizontale Führungsträger benötigt dann lediglich einen weiteren Tragschlitten mit Führungsbalken, an dem ein Verstellschlitten verschiebbar sein kann, an welchem der vertikal verstellbare Halteschlitten mit der drehbaren Klemmzange gelagert sein kann. Durch eine solche Anordnung mit z.B. zwei Manipulatoren können z.B. gleichzeitig zwei kleinere Werkstücke gleichzeitig in einer entsprechend bemessenen Biegemaschine bearbeitet werden. Die andere Möglichkeit besteht darin, mit dem einen Manipulator ein Werkstück zuzuführen und mit dem zweiten Manipulator ein zuvor fertiggestelltes Werkstück abzutransportieren. Es ergeben sich somit erhebliche Rationalisierungsmöglichkeiten, weil der Manipulator jeweils von oben her oberhalb der Arbeitsebene zugeführt werden kann und nicht unterhalb der Arbeitsebene diese unterbrechend angeordnet ist.

Besonders vorteilhaft ist es, wenn die vorbeschriebenen Merkmale und Maßnahmen einzeln oder insbesondere in zweckmäßigen Kombinationen an einer als Biegemaschine für Blechtafeln ausgebildeten Bearbeitungsmaschine verwirklicht werden. Solche Blechtafeln sollen häufig an allen vier Rändern mit Umbiegungen und Profilierungen versehen werden, so daß der erfindungsgemäß mit mehreren Freiheitsgraden bewegbare Manipulator ein solches Blech-Werkstück aus einer vorpositionierten Lage erfassen, der Biegemaschine zuführen und dann auch innerhalb der Biegemaschine in die unterschiedlichen Bearbeitungspositionen bringen kann. Da der Manipulator neben einer Drehbewegung auch mehrere horizonale Verschiebebewegungen durchführen kann, muß er dabei nicht im Zentrum des Werkstückes angreifen, so daß er beliebig bemessene Werkstücke erfassen kann, wobei lediglich die Größe der Maschine die Größe der Werkstücke begrenzt. Wird beispielsweise eine Blechtafel relativ nahe an einem Rand von dem Manipulator und dessen Klemmzange erfaßt, kann nach einer ersten Biegung eines ersten Randes eine Drehung beispielsweise um 90° erfolgen. Da die Klemmzange nicht im Zentrum, sondern nahe dem beispielsweise der ersten Biegung gegenüberliegenden Rand angreift, ergibt sich durch diese Drehung eine Verschwenkung des gesamten Werkstückes, also eine andere Lage des um 90° versetzten Randes, die aber durch eine entsprechende Verschiebung des Manipulators und der Klemmzange ausgeglichen werden kann, so daß auch die zweite zu biegende Kante in einer günstigen Lage innerhalb der Biegemaschine gebogen wird, ohne daß der Manipulator umgreifen muß.

Aber auch ein Umgreifen ist aufgrund der Gestaltung der Klemmzange und der möglichen Bewegungen auf einfache Weise möglich.

Nachstehend sind Ausführungsbeispiele der Erfindung anhand der Zeichnung näher beschrieben. Es zeigt in schematisierter Darstellung
- Fig. 1: eine Seitenansicht einer Biegemaschine mit einem oberhalb der Auflage für ein Werkstück und oberhalb des Werkstückes selbst angeordneten, in mehreren Freiheitsgraden sowohl in horizontaler Richtung als auch vertikal bewegbaren und drehbaren Manipulator mit einer Klemmzange,
- Fig.2: eine gegenüber Fig.1 um 90° gedrehte Ansicht der Biegemaschine gemäß Fig.1 von der Seite der Werkstückzuführung aus gesehen, wobei die Biegemaschine mit zwei Manipulatoren versehen ist, so daß wahlweise große Werkstücke oder auch zwei einzelne Werkstücke gleichzeitig oder nacheinander erfaßt und bearbeitet werden können,
- Fig.3: eine schematisierte Draufsicht der Biegemaschine gemäß Fig.2, wobei jeweils zwei als Bleche ausgebildete Werkstücke in einer Ausrichtstation und in der eigentlichen Biegemaschine sowie schließlich in einer Ablage für die fertigen Teile dargestellt sind, die mit den beiden Manipulatoren gemäß Fig.2 jeweils gleichzeitig erfaßt und bearbeitet werden können,
- Fig.4: in vergrößertem Maßstab und teilweise im Längsschnitt die Ausbildung des Manipulators mit der Lagerung der Klemmzange,
- Fig.5: eine gegenüber Fig.4 um 90° verdrehte Ansicht des Manipulators und der Klemmzange, die dabei als Obergriff zwei parallele Klemmstempel gegenüber dem Untergriff aufweist,
- Fig.5a: eine vergrößerte Darstellung der in Fig.5 markierten Einzelheit A mit dem Angriff eines Klemmstempels des Obergriffes der Klemmzange an dem zugehörigen Untergriff,
- Fig.6: in Seitenansicht eine Klemmzange in Gebrauchsstellung, mit welcher ein in Biegeposition befindliches Werkstück an einem schon gebogenen Rand erfaßt wird, wobei ein gebogener Rand in einem Freiraum der Klemmzange untergebracht ist,
- Fig.7: eine der Fig.6 entsprechende Darstellung, bei welcher die Klemmzange an dem gebogenen Rand eines kleinen Werkstückes angreift,
- Fig.8: eine der Fig.7 entsprechende Darstellung, bei welcher das Werkstück mit Hilfe des Manipulators relativ zu dem Biegewerkzeug und seinem Niederhalter verstellt ist,
- Fig.9: eine Seitenansicht der Klemmzange beim Erfassen eines Biegeteiles in vorderster Position,
- Fig.10: eine der Fig.9 entsprechende Darstellung, nachdem der Untergriff gelöst und dadurch die Klemmzange geöffnet ist,
- Fig.11: eine der Fig.9 und 10 entsprechende Darstellung nach dem Abheben der geöffneten Klemmzange von dem gebogenen Werkstück,
- Fig.12: eine Klemmzange, mit der ein Werkstück erfaßt ist, bei welchem eine gegenüber dem Niederhalter nach unten gebogene letzte Biegung vorgesehen ist, wobei der Niederhalter geöffnet ist,
- Fig.13: eine der Fig.12 entsprechende Darstellung, nachdem das Werkstück mit Hilfe der Klemmzange gegenüber seiner Auflage um mehr als die Abmessung des abwärts gebogenen Randes angehoben ist,
- Fig.14: eine den Fig.12 und 13 entsprechende Darstellung, in welcher das gebogene Werkstück mit Hilfe des es erfassenden Manipulators aus dem Bereich des Niederhalters herausbewegt ist,
- Fig.15: eine Seitenansicht des Manipulators, der an einem Werkstück mit Ausbruch durch diesen Ausbruch an dem den Ausbruch begrenzenden Rand von innen her angreift,
- Fig.16: eine der Fig.15 entsprechende Darstellung nach dem Lösen des Obergriffes gegenüber dem Untergriff,
- Fig.17: eine den Fig.15 und 16 entsprechende Darstellung, bei welcher die Klemmzange von dem Haltebereich zum Inneren des Ausbruches hin verstellt ist, um von dem Werkstück gelöst zu werden,
- Fig.18a bis 18d: die Draufsicht einer Biegemaschine für das Biegen von gleichzeitig zwei Werkstücken und die Biegefolge beim synchronen Biegen der beiden Werkstücke an drei oder vier Kantenseiten,
- Fig.19a bis 19c: eine Draufsicht einer Biegemaschine mit zwei Manipulatoren und die Biegefolge von Werkstücken mit einem zentralen Ausbruch, an welchem die Klemmzange von innen her angreift, sowie
- Fig.20: eine Draufsicht einer Biegemaschine mit der Darstellung des Manipulators auch in geschwenkter Position, wodurch zusätzliche Biegungen vor allem dann möglich sind, wenn das Biegewerkzeug geteilt ist.

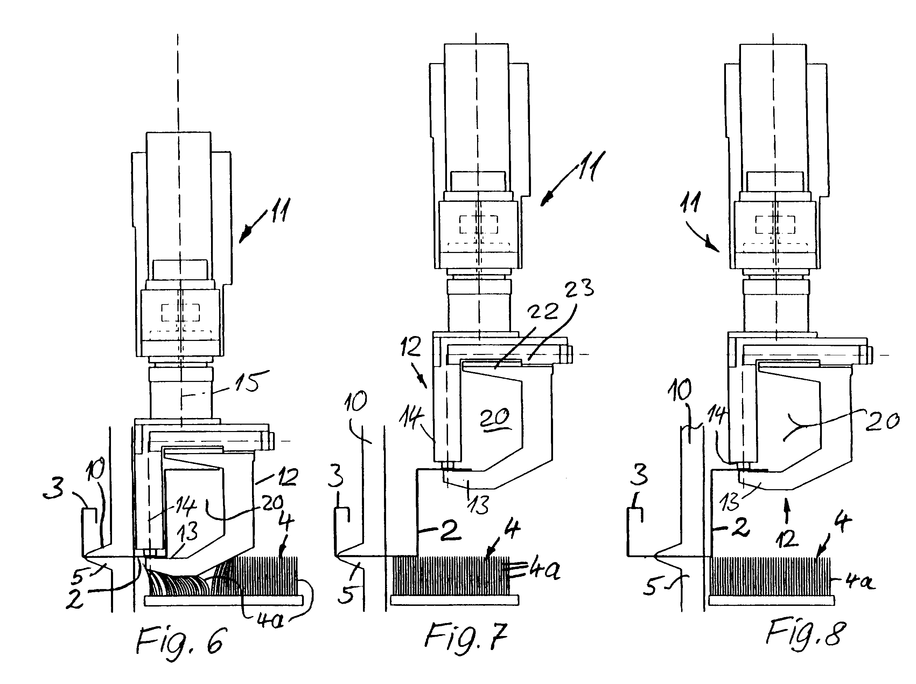

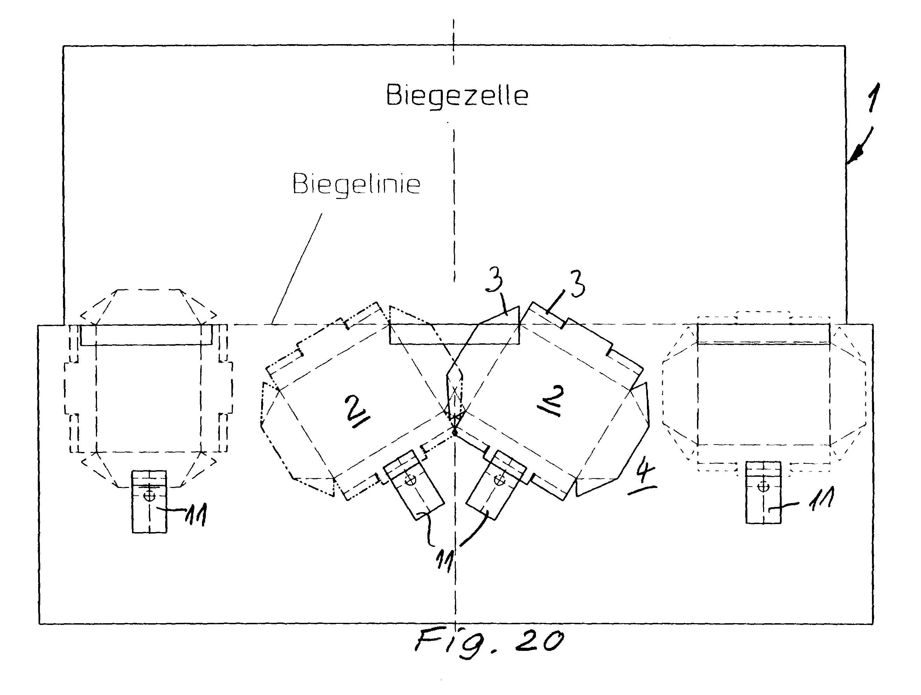

Eine im ganzen mit 1 bezeichnete Biegemaschine wird im folgenden auch "Biegemaschine 1" genannt. Sie dient dazu, plattenförmige Werkstücke 2, im Ausführungsbeispiel Blechteile oder Blechtafeln, an den Rändern 3 zu biegen, so daß ein- oder mehrfach abgekantete Ränder 3 entstehen, wie man sie beispielsweise in den Fig. 6 bis 14 sowie 18 bis 20 erkennt. Die gebogenen Ränder 3 können dabei unterschiedliche Querschnitte haben, verlaufen aber - von Sonderfällen gemäß Fig. 20 abgesehen - randparallel.

Die Biegemaschine 1 hat dabei eine horizontale Werkstückauflage 4, die in Flucht mit einem Gegenhalter 5 angeordnet ist, der somit ebenfalls noch zu der Werkstückauflage 4 gehört. Ferner weist die Biegemaschine 1 ein Bearbeitungs-oder Biegewerkzeug 6 auf, welches im Ausführungsbeispiel eine obere Biegeleiste 7 und eine untere Biegeleiste 8 an einem Biegebalken 9 trägt. Nahe diesem Bearbeitungswerkzeug 6 ist ein mit dem Gegenhalter- 5 zusammenwirkender Niederhalter 10 für das Werkstück 2 vorgesehen, so daß dieses nahe dem Werkzeug 6 zwischen Niederhalter 10 und Gegenhalter 5 für seine Bearbeitung, insbesondere für das Anbringen eines gebogenen Randes 3 eingespannt werden kann.

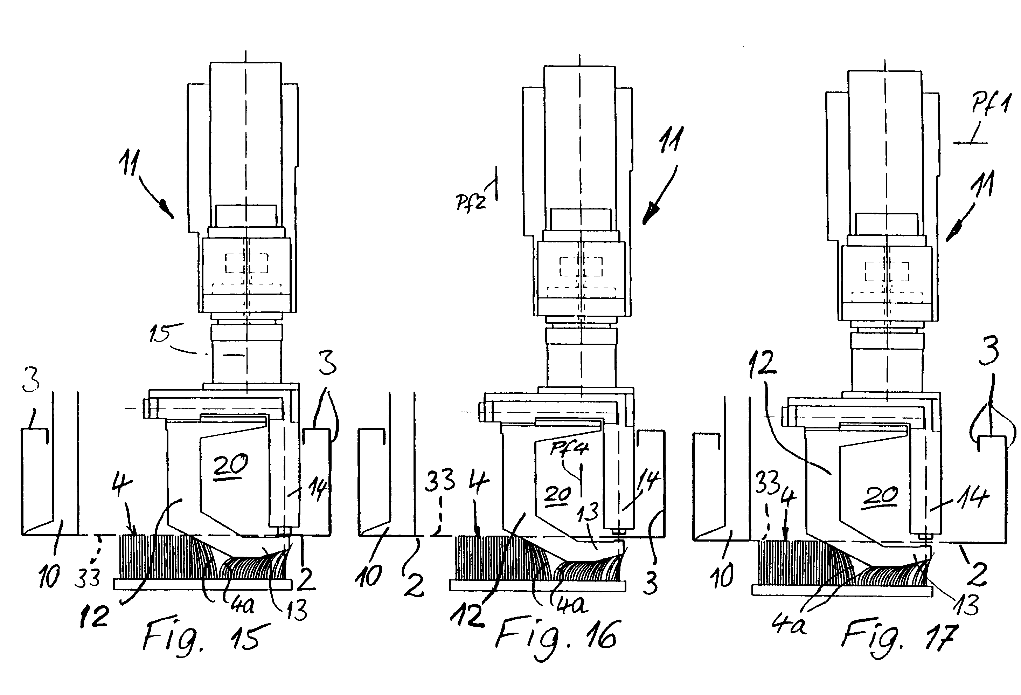

Die Biegemaschine 1 weist einen insgesamt mit 11 bezeichneten Manipulator mit einer Klemmzange 12 auf, womit das Werkstück 2 erfaßt und der Bearbeitungsmaschine 1 sowie der Werkstückauflage 4 und der aus Gegenhalter 5 und Niederhalter 10 bestehenden Haltevorrichtung zugeführt werden kann. Die Klemmzange 12 hat dabei einen Untergriff 13 und einen demgegenüber in Gebrauchsstellung zumindest teilweise vertikal bewegbaren Obergriff 14, so daß das Werkstück 2 von der Klemmzange 12 zwischen Untergriff 13 und Obergriff 14 gehalten werden kann, wie man es in den Fig. 6 bis 17 erkennt, wobei in Fig. 16 das Lösen der Klemmzange 12 von dem Werkstück 2 durch ein Verstellen des Obergriffes 14 von dem Untergriff 13 weg nach oben dargestellt ist.

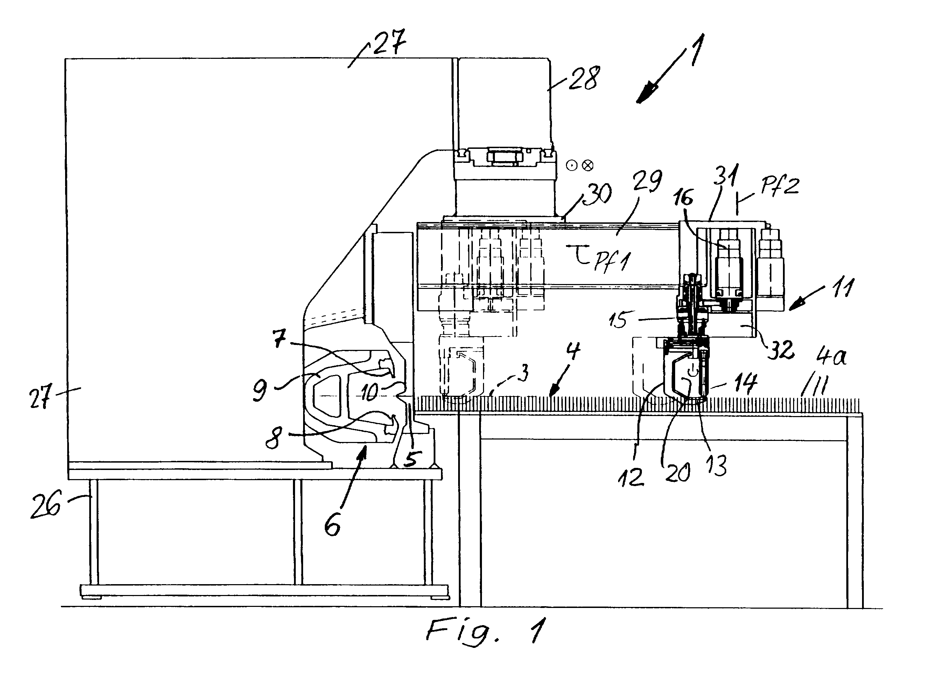

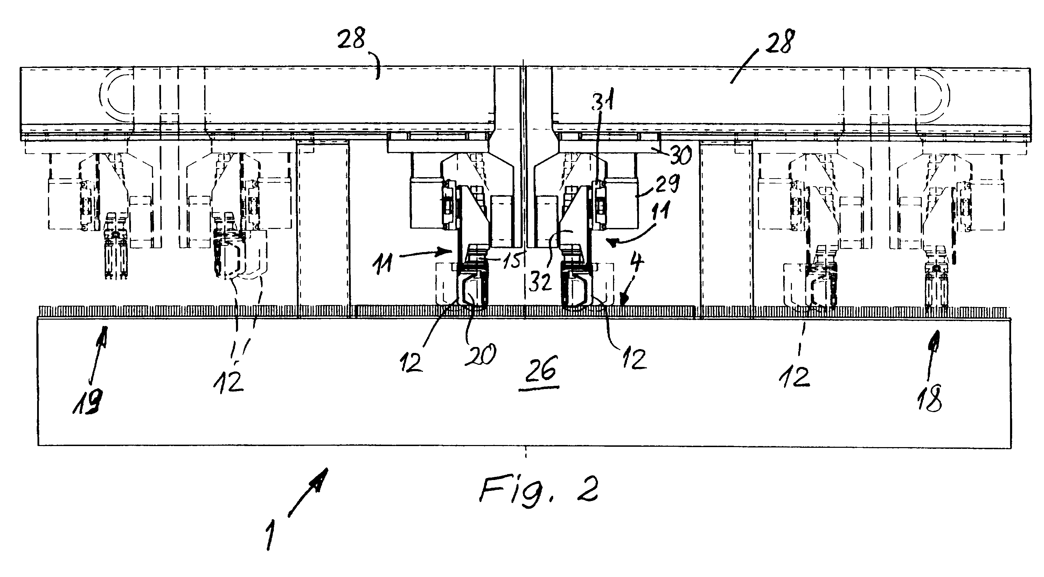

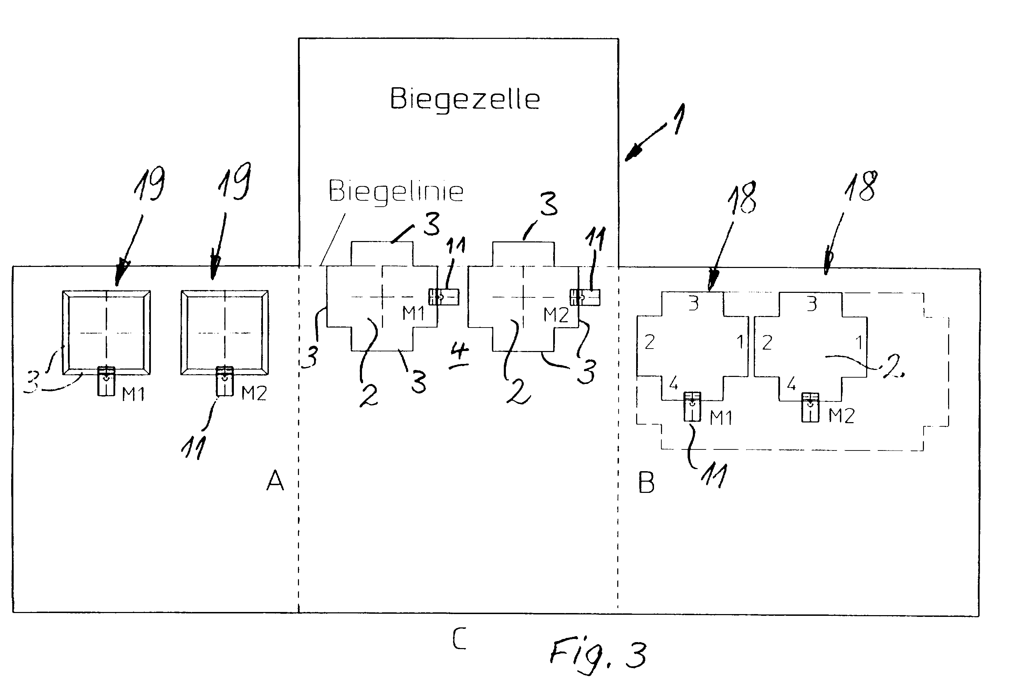

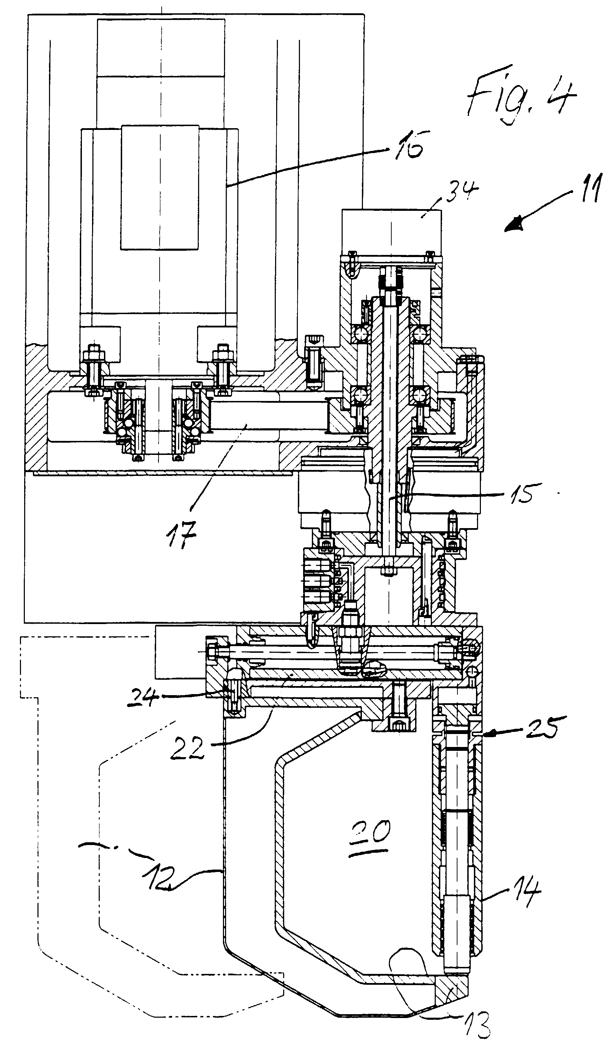

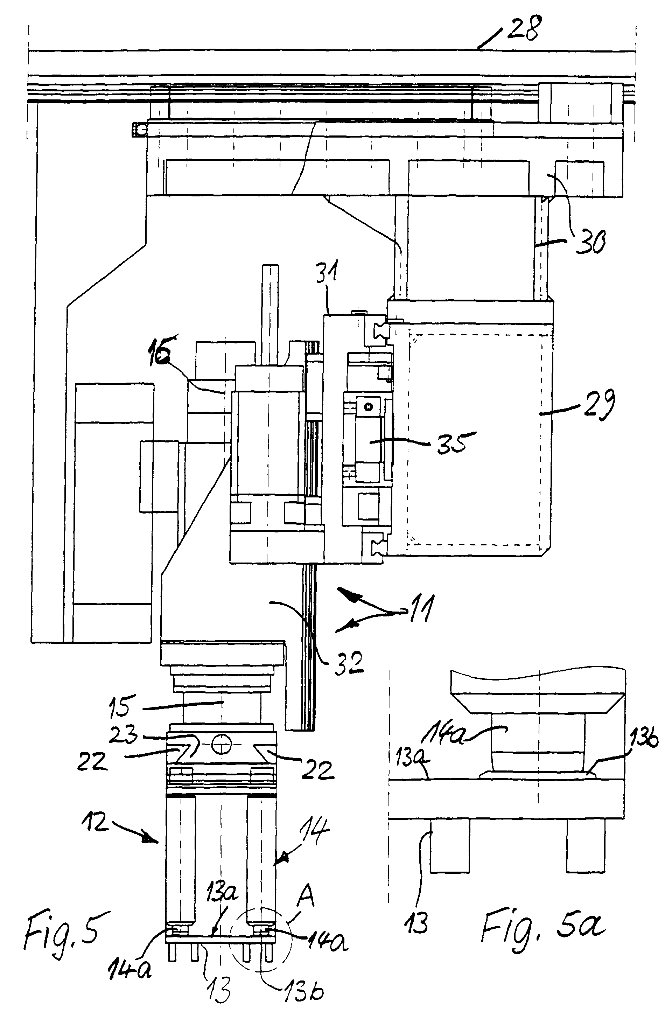

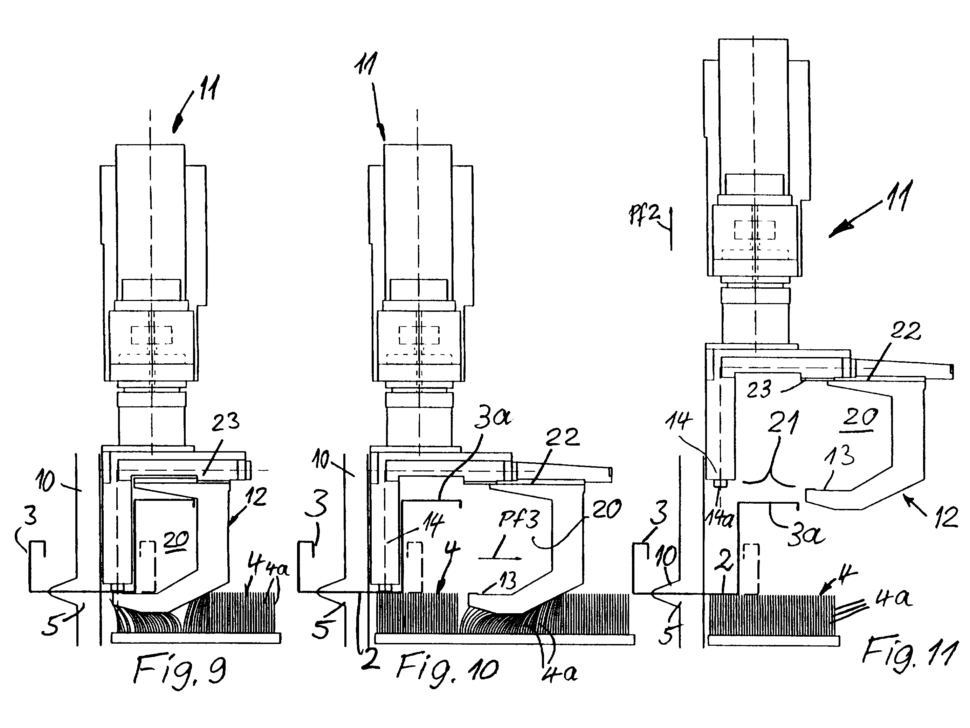

In noch zu beschreibender Weise kann die Klemmzange 12 etwa in der Ebene des Werkstückes 2 oder in einer Parallelebene dazu quer oder rechtwinklig zu dem zu bearbeitenden Rand 3 des Werkstückes 2 oder quer- oder rechtwinklig zu dem Werkzeug 6 und damit auch zu der Erstreckung des Gegenhalters 5 und des Niederhalters 10 bewegt werden, was beispielsweise in Fig. 1 durch den Doppelpfeil Pfl angedeutet ist. Zusätzlich erkennt man diese Bewegungsmöglichkeit beispielsweise durch den Vergleich der Fig. 7 und 8 oder der Fig. 13 und 14 oder den Fig. 16 und 17. Somit kann mit der Klemmzange 12 ein Werkstück 2 erfaßt und auf der Werkstückauflage 4 dem Bereich des Werkzeuges 6 zugeführt oder von dort auch wieder wegbewegt werden.

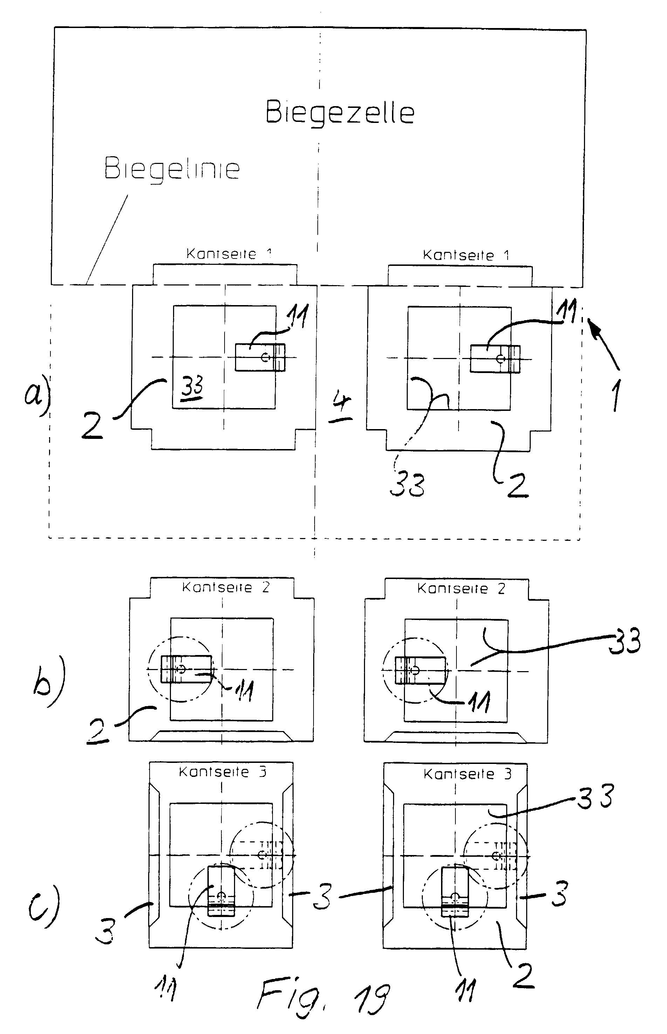

Zusätzlich ist eine Drehung des Werkstückes 2 um eine vertikale Achse 15 möglich, so daß die in Fig. 18a bis 18d, in Fig. 19a bis 19c und in Fig. 20 angedeuteten Biegeschritte möglich sind, bei denen mehrere im Winkel zueinander angeordnete Ränder 3 eines Blechteiles oder Werkstückes 2 nacheinander gebogen werden, wobei dieses Werkstück 2 von der Klemmzange 12 des Manipulators 11 gehalten und jeweils gedreht wird.

In allen Figuren ist deutlich erkennbar, daß der Manipulator 11 oberhalb der Bearbeitungsebene des Werkstückes 2 und oberhalb der Auflage 4 für das Werkstück 2 angeordnet und gelagert ist und vor allem in Fig. 2 ist dargestellt, daß die Klemmzange 12 zusätzlich zu ihrer quer- oder rechtwinklig zu dem zu bearbeitenden Werkstückrand 3 orientierten Verschiebbarkeit auch parallel zu diesem Werkstückrand 3, also parallel zu der Erstreckung des Werkzeuges 6 und des Gegenhalters 5 und des Niederhalters 10, also praktisch parallel zu der Biegekante verstellbar ist.

Die schon erwähnte Möglichkeit, das Werkstück 2 um eine vertikale Achse zu verdrehen, ist dabei dadurch realisiert, daß die Klemmzange 12 um eine rechtwinklig zur Werkstückebene und zur Werkstückauflage 4 verlaufende Achse 15 drehbar gelagert ist. Die Klemmzange 12 ist also selbst insgesamt drehbar und kann somit auch ein von ihr erfaßtes Werkstück 2 um diese Achse 15 verdrehen.

Vor allem in Fig. 4 erkennt man einen Antriebsmotor 16, der mit Hilfe eines Riementriebes 17 an der drehbaren Achse 15 angreift, an welcher die Klemmzange 12 aufgehängt ist.

Durch den vertikalen Doppelpfeil Pf2 in Fig. 1 ist angedeutet, daß der Manipulator 11 insgesamt in einer Richtung rechtwinklig zur Bearbeitungsebene oder Werkstückauflage 4 verstellbar und zwar vor allem nach oben anhebbar, aus einer solchen angehobenen Position aber selbstverständlich auch wieder absenkbar ist. Dadurch kann die Klemmzange 12 in unterschiedlichen Höhenlagen angeordnet werden, wie es anhand der Fig. 11, 13 und 14 angedeutet ist. Vor allem für einen Zuführ- oder Abführvorgang für ein Werkstück 2 ist diese vertikale Anhebbarkeit vorteilhaft. Darüber hinaus kann die Klemmzange 12 an solchen Werkstücken 2 angreifen, die nicht eben, sondern profiliert sind, wie es beispielsweise in Fig. 6 bis 8 angedeutet ist. Hat ein Werkstück zwei Abkantungen und dadurch mehrere Ebenen, kann durch die Höhenverstellbarkeit auch die jeweils günstigste Stelle des Werkstückes 2 in unterschiedlichen Höhenlagen erfaßt werden (vgl. zum Beispiel Fig.6 und 7).

In Fig. 3 ist in einer schematisierten Draufsicht der Biegemaschine 1 dargestellt, daß sie mehr als eine Abnahmestelle 18, in diesem Falle zwei derartige Abnahmestellen 18 für Werkstücke 2 aufweisen kann, die sich alle innerhalb des Verschiebebereiches des Manipulators 11 und damit auch der Klemmzange 12 befinden, wobei die jeweiligen Werkstücke 2 in diesen Abnahmestellen 18 schon ihre richtige Positionierung für ihre Weiterbearbeitung haben können, so daß sie von dem Manipulator 11 und der Klemmzange 12 erfaßt und der Biegemaschine 1 und deren Biegewerkzeug 6 direkt und ohne das Erfordernis eines Ausrichtens in der Biegemaschine 1 selbst zugeführt werden können.

In Fig. 3 ist dabei angedeutet, was auch in Fig. 2 deutlicher dargestellt ist, daß die Bearbeitungsmaschine 1 in diesem Falle wenigstens einen weiteren Manipulator 11 mit Klemmzange 12 aufweist, also als Zwillingsmaschine ausgestaltet sein kann, um z.B. gleichzeitig zwei Werkstücke oder Bleche 2 bearbeiten zu können oder ein Werkstück 2 der Biegemaschine und dem Biegewerkzeug 6 zuzuführen, während ein schon bearbeitetes Werkstück 2 zu einer Lagerung 19 für fertigbearbeitete Werkstücke transportiert wird.

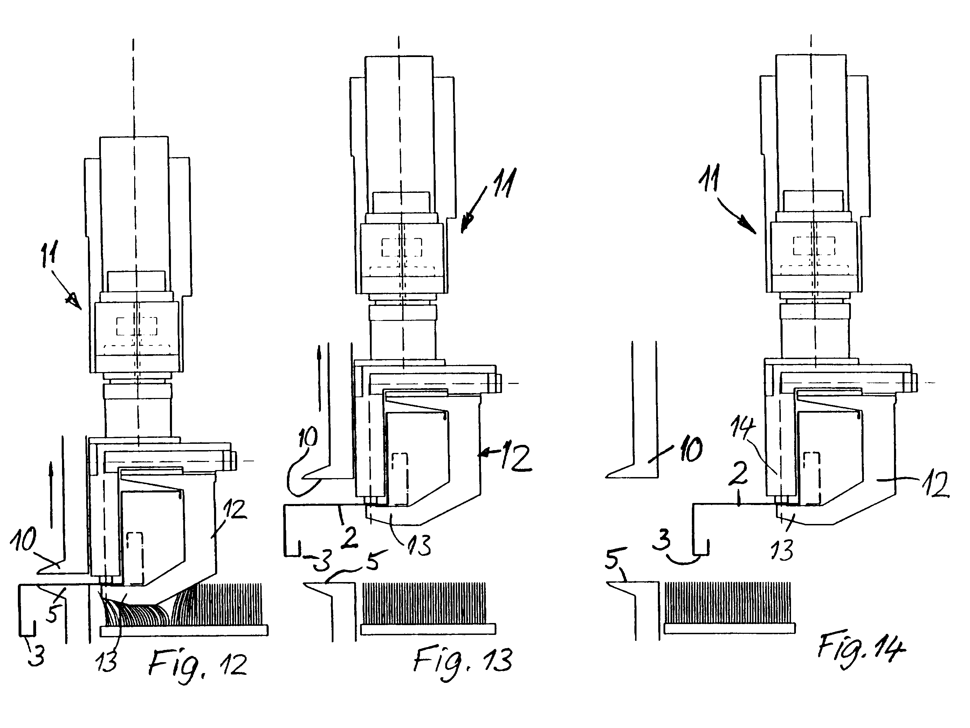

In Fig. 1, vor allem aber in Fig. 4 und ferner in den Fig.6 bis 17 ist dargestellt, daß der Obergriff 14 gegenüber dem Untergriff 13 der Klemmzange 12 einen Freiraum 20 aufweist oder bildet, so daß auch ein schon profilierter Rand 3 des Werkstückes 2 bei geschlossener Klemmzange 12 umgriffen werden kann, wie es beispielsweise in Fig. 12 bis 14 oder auch in Fig. 9 angedeutet ist. Gemäß Fig. 10 und 11 ist der Untergriff 13 zum Öffnen dieses Freiraumes 20 und damit zum Freigeben eines Werkstückes 2 relativ zu seiner Schließlage aus dem Bereich des Obergriffes 14 wegbewegbar.

Im Ausführungsbeispiel ist der Untergriff 13 zum Freigeben des Werkstückes 2 und des Freiraumes 20 gegenüber dem Obergriff 14 in horizontaler Richtung parallel zu dem Werkstück 2 und rechtwinklig zu dessen Rand 3 verschiebbar, wie man es beim Vergleich der Fig. 9 bis 11 deutlich erkennt. Die Verschiebung des Untergriffes 13 von dem Obergriff 14 weg ist in Fig. 10 durch den Pfeil Pf3 verdeutlicht. Der Verschiebeweg ist dabei genügend groß, um zwischen Obergriff 14 und Untergriff 13 eine nach unten offene Lücke oder einen Abstand 21 zu öffnen, durch welchen auch ein umgebogener Rand 3a herausbewegt werden kann, wie es in Fig.11 angedeutet ist.

Es wurde schon erwähnt, daß der Obergriff 14 gegenüber dem Untergriff 13, der zum Öffnen in horizontaler Richtung gem. dem Pfeil Pf3 verschiebbar ist, zur Erzeugung einer Klemmkraft vertikal bewegbar ist. Die Lösebewegung der Klemmkraft ist dabei in Fig.16 durch den nach oben gerichteten Pfeil Pf4 angedeutet. Wird der Obergriff 14 entgegen dem Pfeil Pf4 auf den Untergriff 13 zubewegt, kann ein dort befindliches Werkstück 2 erfaßt und einklemmt werden.

In Fig. 5 ist dargestellt, daß der Obergriff 14 aus wenigstens zwei in vertikaler Richtung für das Spannen und Lösen bewegbaren Klemmstempeln 14a besteht bzw. solche Klemmstempel 14a aufweist, die aufgrund eines gewissen Abstandes zueinander eine bessere Halterung eines von der Klemmzange 12 erfassten Werkstückes 2 ermöglichen. Der Untergriff 13 hat demgegenüber eine ungeteilte Auflagefläche 13a, die aber im Bereich des oder der Klemmstempel 14a des Obergriffes 14 jeweils eine erhabene oder erhöhte Gegenfläche 13b für den jeweiligen Klemmstempel 14a hat, so daß sich definierte, zueinander beabstandete Klemmstellen zwischen Obergriff 14 und Untergriff 13 ergeben. Entsprechend fest und sicher kann ein Werkstück 2 auch in seinem Randbereich 3 erfaßt werden.

An der Klemmzange 12 könnte auch auf andere Weise erreicht werden, daß wenigstens zwei beabstandete Klemmstellen vorhanden sind. Beispielsweise könnte mit nur einem Klemmzylinder oder Klemmstempel 14a, der dann etwa mittig anzuordnen wäre, eine an dessen unterem Ende angeordnete Klemmwippe beaufschlagt werden, die die beiden Klemmstellen zum Zusammenwirken mit den Gegenflächen 13b des Untergriffes 13 aufweisen kann. Diese nicht näher dargestellte Wippe ist dabei um eine etwa rechtwinklig zu einem solchen Klemmstempel orientierte mittlere Achse schwenkbar zu lagern. Auch dadurch können eventuelle geringfügige Maßabweichungen des Werkstückes bei dem Erfassen mit der Klemmzange 12 ausgeglichen werden, wobei dennoch gleichzeitig über zwei Klemmstellen eine verbesserte Manipulierbarkeit beispielsweise auch beim Durchführen von Drehbewegungen erreicht wird.

In Fig. 5 erkennt man außerdem die Schiebeführung 22, in diesem Falle eine Schwalbenschwanzführung, mit welcher der verschiebbare Untergriff 13 an dem Obergriff 14 verschiebbar angreift. Aus den Fig. 1, 4 sowie 6 bis 17 wird deutlich, daß der Untergriff 13 dabei insgesamt einen etwa C-förmigen Umriß oder eine C-förmige Form hat, wobei das Innere dieses "C" zumindest einen Teil des Freiraumes 20 der Klemmzange 12 und der untere, in Gebrauchsstellung etwa horizontale Schenkel den eigentlichen Untergriff bzw. die Auflagefläche 13a mit den Gegenflächen 13b sowie der obere Schenkel das Führungsteil 22 des Untergriffes und gleichzeitig die biegesteife Verbindung des Untergriffes 13 zu seiner Aufhängung oder Schiebelagerung 23 bildet. Trotz der Verschiebbarkeit des gesamten Untergriffes 13 relativ zu dem Obergriff 14 kann also eine hohe Klemmkraft zwischen Untergriff 13 und Obergriff 14 übertragen und in die in Schieberichtung relativ lange Führung 22 und Schiebelagerung 23 eingeleitet werden.

Im Ausführungsbeispiel ist die Werkstückauflage 4 durch hochstehende Borsten 4a gebildet, so daß ein Werkstück 2 gut auf dieser Werkstückauflage 4 verschoben werden kann, ohne daß die Gefahr von Oberflächenschädigungen besteht. Der Untergriff 13 ist an seiner Unterseite gegenüber den Bewegungsrichtungen kufenförmig abgerundet oder abgeschrägt, so daß er gegenüber der Werkstückauflage 4 und den Borsten 4aleicht verschoben werden kann, wie es in Fig. 6, 9, 10 oder 15 bis 17 angedeutet ist.

Gemäß Fig. 4 haben der Untergriff 13 und der Obergriff 14 der Klemmzange 12 jeweils eine Sollbruchstelle 24 und 25. Dadurch wird sichergestellt, daß im Falle einer Kollision eines beispielsweise verformten oder beschädigten Werkstückes 2 z.B. mit dem Maschinengestell 26 gezielt ein leicht auswechselbares Teil bricht und nicht die noch zu beschreibenden Führungen des Manipulators 11 beschädigt werden. Die Sollbruchstellen 24 und 25 sind also zwischen einem leicht ersetzbaren Teil der Klemmzange 12 und deren übrigen Teilen oder dem Manipulator 11 angeordnet.

Die Sollbruchstelle 24 für den Untergriff ist im Ausführungsbeispiel durch eine schwache oder geschwächte Befestigungsschraube zum Anbringen des Untergriffes 13 an seiner Schiebeführung 22 gebildet. Der Obergriff 14 hat eine Ringnut als Sollbruchstelle 25, wodurch eine gezielte Verformung oder ein gezielter Bruch vorgegeben ist.

Es wurde schon erwähnt, daß der Manipulator 11 oberhalb der Werkstück- und Bearbeitungsebene 4 aufgehängt ist. In Fig. 1 erkennt man, daß die oberhalb der Werkstück- und Bearbeitungsebene 4 angeordnete, im folgenden noch näher zu erläuternde Aufhängung und Lagerung für den Manipulator 11 mit dem Maschinengestell 26 der Biegemaschine 1 direkt verbunden ist und dazu einen auf dem Maschinengestell 26 angeordneten Ständer 27 aufweist, so daß sich praktisch eine direkte Verbindung zwischen Maschinengestell 26 und Manipulator 11 ergibt. Der Ständer 27 könnte aber auch ein eigener Ständer sein, der im Bereich der Aufstellfläche mit dem Maschinengestell 26 in einer definierten Abstandslage angeordnet und fixiert sein könnte. Während also gemäß Fig. 1 im Ausführungsbeispiel Maschinengestell 26 und Halteständer 27 für den Manipulator 11 und dessen Führungen eine Einheit bilden, könnten sie auch unabhängig voneinander feste Standorte auf einem gemeinsamen oder zwei in vorgegebenem Abstand angeordneten Fundamenten haben.

Für die schon erwähnten unterschiedlichen Verstellmöglichkeiten des Manipulators 11 ist wesentlich, daß an der Bearbeitungsmaschine 1 oder dem Maschinengestell 26, im Ausführungsbeispiel an dem Ständer 27 an einem horizontalen Führungsträger 28, der parallel zu einer Bearbeitungsseite eines Werkstückes 2 und parallel zu Gegenhalter 5 und Niederhalter 10 verläuft, ein weiterer horizontaler, jedoch rechtwinklig zu diesem Führungsträger 28 angeordneter Führungsbalken 29 angeordnet ist, der über einen Tragschlitten 30 mit dem Führungsträger 28 verbunden ist. Durch die Verstellung des Tragschlittens 30 entlang dem Führungsträger 28 kann also der Führungsbalken 29 in unterschiedliche Positionen gebracht werden und dabei aufgrund der entsprechend bemessenen Länge oder Ausdehnung des Führungsträgers bis in den Bereich der Abnahmestellen 18 einerseits und der Ablagestelle 19 andererseits verstellt werden, wie es in Fig. 2 angedeutet ist.

Der Führungsbalken 29 trägt gem. Fig. 1 seinerseits einen horizontal verschiebbaren Verstellschlitten 31, so daß die Bewegungen des Manipulators 11 in all den Positionen des Führungsbalkens 29 rechtwinklig zu dem Werkzeug 6, dem Gegenhalter 5 und dem Niederhalter 10 und der entsprechenden Biegelinie durchgeführt werden können. An diesem Verstellschlitten 31 ist ein vertikal gem. dem Doppelpfeil Pf2 in Fig. 1 verstellbarer Halteschlitten 32 angeordnet, an welchem die Klemmzange 12, wie bereits beschrieben, drehbar gelagert ist. Aus dieser Gesamtkontruktion ergeben sich die Freiheitsgrade, mit denen der Manipulator 11 bzw. die zu ihm gehörende Klemmzange 12 verstellt und verdreht werden kann, so daß auch ein Werkstück 2 entsprechend vielfältige Bewegungen durchführen kann. Gemäß Fig. 18 kann beispielsweise ein Werkstück 2 mit einem abzukantenden Rand zwischen Gegenhalter 5 und Niederhalter 10 gebracht werden, wobei in Fig. 18a der zuerst umzubiegende Rand als "Kantseite 1" bezeichnet ist.

Gemäß Fig. 18b kann dann der Manipulator 11 und die Klemmzange 12 aus der in Fig. 18a dargestellten Position einerseits um 180° gedreht und andererseits in Richtung der Biegelinie verstellt werden, so daß der dem nunmehr gebogenen ersten Rand gegenüberliegende Rand, in Fig. 18b als "Kantseite 2" bezeichnet, in den Bereich des Biegewerkzeuges 6 gelangt. Nach dem Biegen dieses zweiten Randes "Kantseite 2" wird der Manipulator gemäß Fig. 18c um 90° gedreht und außerdem etwas von der Biegelinie bzw. dem Biegewerkzeug 6 wegverstellt, um den dritten Rand "Kantseite 3" in den Bereich der Biegelinie und des Biegewerkzeuges 6 zu bringen. Dabei ist in Fig. 18c angedeutet, daß anschließend die Klemmzange 12 von dem Werkstück 2 gelöst und relativ zu ihm versetzt wird, daß also ein Umgreifen stattgfindet, was durch den gebogenen Pfeil Pf5 angedeutet ist. Aufgrund des Freiraumes 20 kann die Klemmzange 12 dabei einen schon gebogenen Rand erfassen.

Um gemäß Fig. 18d auch noch den vierten Rand "Kantseite 4" biegen zu können, wird dann die Klemmzange 12 erneut um 180° zurückgedreht, so daß sie hinsichtlich ihrer Orientierung etwa wieder in der Lage gem. Fig. 18a angeordnet ist, gleichzeitig aber etwas verschoben ist, um die durch das Abkanten geänderten Abmessungen des Werkstückes 2 zu berücksichtigen.

Danach kann dann das Werkstück mit Hilfe des Manipulators 11 und der Klemmzange 12 aus der Biegemaschine 1 wegbewegt werden. Zunächst wird der Niederhalter 10 in Richtung des Pfeiles Pf6 nach oben bewegt, anschließend wird das Werkstück 2 mit Hilfe des Manipulators 11 und der Klemmzange 12 in die gleiche Richtung angehoben, weil in diesem Ausführungsbeispiel einer der Ränder nach unten abgekantet ist, und schließlich wird gemäß Fig. 14 das Werkstück von der Biegelinie 6 rechtwinklig wegbewegt. Anschließend kann es dann zu dem Ablagebereich 19 transportiert werden.

In den Fig. 6 bis 8 ist dargestellt, daß beim Umgreifen an einem kleinen Werkstück 2 an einem gebogenen Rand der Manipulator und die Klemmzange 12 etwas angehoben werden können, um einen höherliegenden Rand zu erfassen.

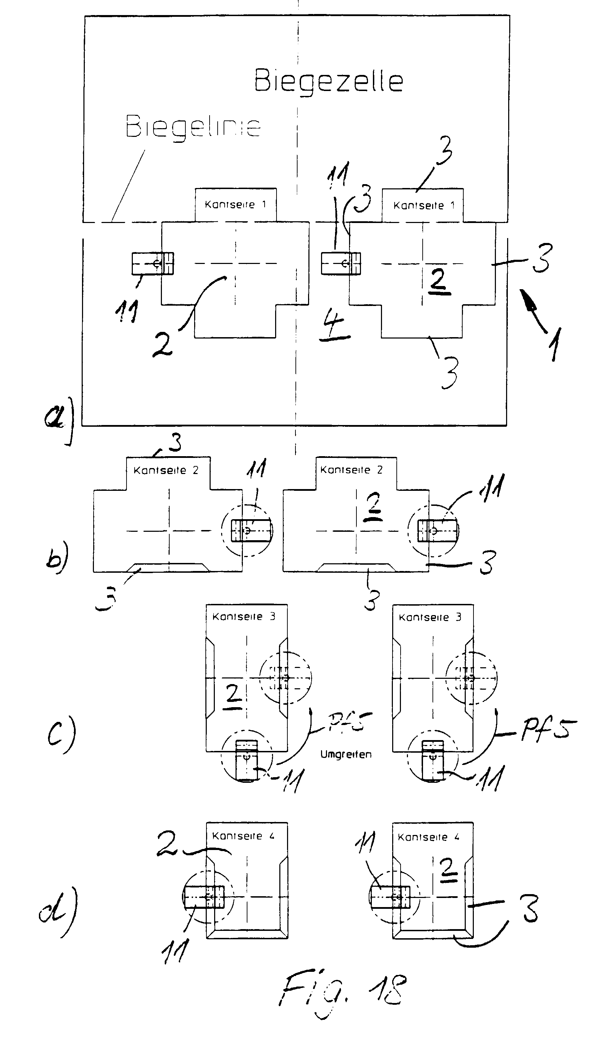

In den Fig. 15 bis 17 und 19 ist dargestellt, wie die Klemmzange 12 an einem Werkstück mit einem zwischen dessen Rändern befindlichen Durchbruch oder Ausbruch 33 von innen her angreift und dabei ebenfalls durch Drehen und Verschieben eine "Kantseite" nach der anderen biegen kann, wobei unter Umständen wiederum auch ein Umgreifen stattfinden kann. Für ein solches Umgreifen kann die Klemmzange 12 gemäß Fig. 17 von dem inneren Rand in den Durchbruch 33 verschoben werden.

In Fig. 20 ist wiederum in einer Draufsicht einer schematisierten Biegemaschine 1 angedeutet, daß es aufgrund der unterschiedlichen Bewegungsmöglichkeiten und Freiheitsgrade in drei Achsen für den Manipulator 11 und die Klemmzange 12 auch die Möglichkeit gibt, vor allem bei einem geteilten Werkzeug 6 und entsprechend geteiltem Niederhalter 10 und Gegenhalter 5 die Werkstücke 2 auch in einer weniger als 90° gedrehten Position anzuordnen und an den Rändern befindliche Kantseiten mit Abbiegungen der Randbereiche zu versehen. Der oder die Manipulatoren werden dann nicht um 90° und 180° usw. verdreht, sondern um einen kleineren oder gegebenenfalls größeren Winkel.

Dabei sei noch erwähnt, daß in den Fig. 18, 19 und 20 in Anlehnung an die Fig. 2 und 3 jeweils eine Biegemaschine 1 dargestellt ist, bei welcher zwei Manipulatoren 11 und Klemmzangen 12 vorhanden sind, so daß zwei Werkstücke 2 gleichzeitig bearbeitet werden können. Statt dessen könnten natürlich auch ein sehr großes Werkstück 2 mit beiden Manipulatoren gleichzeitig erfaßt werden.

Die synchrone Bearbeitung zweier Werkstücke 2 gleichzeitig beschleunigt die Fertigung und erleichtert die Rationalisierung. Darüber hinaus wird auch die Möglichkeit eröffnet, mit dem einen Manipulator 11 ein Werkstück 2 zu erfassen und der Bearbeitungsmaschine 1 zuzuführen, während der zweite Manipulator 11 ein schon bearbeitetes Werkstück 2 weitertransportiert.

Es sei noch erwähnt, daß an den Schlitten 30, 31 und 32 und/oder den Schiebeführungen Weggeber und an der Drehlagerung der Klemmzange 12 ein Drehgeber 34 (Fig. 4) angeordnet und diese Geber mit der Steuerung der Bearbeitungsmaschine 1 verbunden sein können, so daß sich wiederholende Bewegungsabläufe programmiert werden können. Für möglichst präzise Verstellbewegungen ist es dabei zweckmäßig, wenn für die Verstellung der beiden horizontal verstellbaren Schlitten 30 und 31 spielfreie elektrische Direkt-Linearantriebe 35 (Fig. 5) vorgesehen sind. Bei dem Ausführungsbeispiel mit zwei Manipulatoren 11 ist besonders vorteilhaft, wenn diese an dem gleichen Führungsträger 28 angeordnet sind, der eine entsprechend große Länge haben kann.

Die Biegemaschine 1 erlaubt es, an plattenförmigen Werkstücken 2 die Ränder 3 zu biegen. Die Werkstücke 2 können dabei mit einer zu einem Manipulator 11 gehörenden Klemmzange 12 erfaßt und einem Werkzeug 6 und einer Halterung zugeführt werden. Da der Manipulator 11 oberhalb der Bearbeitungsebene und Werkstückauflage 4 angeordnet und gelagert ist und die Klemmzange 12 zusätzlich zu einer quer- oder rechtwinklig zu dem Werkzeug 6 orientierten Verschiebbarkeit auch parallel dazu verstellbar und außerdem um eine rechtwinklig zur Werkstückebene verlaufende Achse 15 drehbar gelagert ist, können die Werkstücke 2 an beliebiger Stelle erfaßt und dann zugeführt werden, wobei zusätzliche Zuführ-, Umsetz- und Entnahmevorrichtungen vermieden werden können, weil all diese Funktionen auch von dem Manipulator 11 erfüllt werden können.

## Patentansprüche

1. Biegemaschine (1) für plattenförmige Werkstücke (2), zur Erzeugung von gebogenen Rändern (3) mit einer horizontalen Werkstückauflage (4) und mit einem einen Biegebalken (9) aufweisenden Biegewerkzeug (6) sowie mit einem nahe dem Biegewerkzeug (6) angeordneten Niederhalter (10) für das Werkstück (2), wobei die Biegemaschine (1) wenigstens einen Manipulator (11) mit einer Klemmzange (12) zum Erfassen des Werkstückes (2) aufweist, welche Klemmzange (12) einen Untergriff (13) und einen insbesondere demgegenüber in Gebrauchsstellung vertikal bewegbaren Obergriff (14) aufweist und etwa in der Ebene des Werkstückes (2) oder in einer Parallelebene dazu quer oder rechtwinklig zu dem zu bearbeitenden Rand (3) des Werkstückes (2) oder quer oder rechtwinklig zu dem Werkzeug (6) bewegbar ist und eine Drehung des Werkstückes (2) um eine vertikale Achse ermöglicht, dadurch gekennzeichnet, daß der Manipulator (11) oberhalb der Bearbeitungsebene des Werkstückes (2) angeordnet und gelagert ist und daß die Klemmzange (12) zusätzlich zu ihrer quer oder rechtwinklig zu dem Niederhalter (10) orientierten Verschiebbarkeit auch parallel zu diesem Niederhalter (10) verstellbar und um eine rechtwinklig zur Werkstückebene verlaufende Achse (15) drehbar gelagert ist.

2. Biegemaschine nach Anspruch 1, dadurch gekennzeichnet, daß die Klemmzange an dem Manipulator (11) und/oder der Obergriff (14) der Klemmzange (12) und/oder der gesamte Manipulator (11) in einer Richtung rechtwinklig zur Bearbeitungsebene verstellbar, insbesondere nach oben anhebbar ist.

3. Biegemaschine nach Anspruch 1 oder 2, dadurch gekennzeichnet, daß sie eine oder mehrere Abnahmestellen (18) für plattenförmige Werkstücke (2) aufweist, die innerhalb des Verschiebebereiches des Manipulators (11) und/oder der Klemmzange (12) angeordnet sind und die jeweiligen Werkstücke (2) insbesondere in schon ausgerichteter Positionierung enthalten.

4. Biegemaschine nach einem der Ansprüche 1 bis 3, dadurch gekennzeichnet, daß der Obergriff (14) gegenüber dem Untergriff (13) der Klemmzange (12) einen Freiraum (20) zum Umgreifen auch eines profilierten Randes (3) des Werkstückes (2) bei geschlossener Klemmzange (12) aufweist und daß der Untergriff (13) zum Öffnen dieses Freiraumes (20) relativ zu der Schließlage aus dem Bereich des Obergriffes (14) und dieses Freiraumes wegbewegbar ist.

5. Biegemaschine nach Anspruch 4, dadurch gekennzeichnet, daß der Untergriff (13) zum Freigeben des Werkstückes (2) und des Freiraumes (20) gegenüber dem Obergriff (14) in horizontaler Richtung um eine vertikale Achse seitlich des Freiraumes verschwenkbar oder insgesamt etwa parallel zu der Werkstückauflage (4) verschiebbar ist.

6. Biegemaschine nach einem der Ansprüche 1 bis 5, dadurch gekennzeichnet, daß der Obergriff (14) gegenüber dem Untergriff (13), insbesondere gegenüber dem in horizontaler Richtung zum Öffnen verschiebbaren Untergriff zur Erzeugung einer Klemmkraft vertikal bewegbar ist.

7. Biegemaschine nach einem der Ansprüche 1 bis 6, dadurch gekennzeichnet, daß die Klemmzange (12) wenigstens zwei beabstandete Klemmstellen aufweist.

8. Biegemaschine nach Anspruch 7, dadurch gekennzeichnet, daß der Obergriff (14) des Manipulators (11) bzw. der Klemmzange (12) aus wenigstens zwei in vertikaler Richtung für das Spannen und Lösen bewegbaren Klemmstempeln (14a) oder einer Klemmwippe mit zwei Klemmstellen und einem sie beaufschlagenden Klemmzylinder besteht.

9. Biegemaschine nach einem der Ansprüche 1 bis 8, dadurch gekennzeichnet, daß der Untergriff eine ungeteilte Auflagefläche (13a) hat, die im Bereich des oder der Klemmstempel (14a) des Obergriffes (14) insbesondere jeweils eine erhabene oder erhöhte Gegenfläche (13b) für den Klemmstempel (14a) hat.

10. Biegemaschine nach einem der Ansprüche 1 bis 9, dadurch gekennzeichnet, daß der gegenüber dem Obergriff (14) in horizontaler Richtung geführt verschiebbare Untergriff (13) mit seiner Schiebeführung zusammen insgesamt einen etwa C- oder U-förmigen Umriß hat, wobei das Innere des C oder des liegenden U zumindest einen Teil des Freiraumes (20) der Klemmzange (12) und der untere, in Gebrauchsstellung etwa horizontale Schenkel den eigentlichen Untergriff sowie der obere Schenkel das Führungsteil (22) des Untergriffes (13) und die biegesteife Verbindung des Untergriffes (13) zu seiner Aufhängung oder Schiebelagerung bilden.

11. Biegemaschine nach einem der Ansprüche 1 bis 10, dadurch gekennzeichnet, daß der Untergriff (13) an seiner Unterseite gegenüber den Bewegungsrichtungen kufenförmig abgerundet oder angeschrägt ist.

12. Biegemaschine nach einem der Ansprüche 1 bis 11, dadurch gekennzeichnet, daß der Untergriff (13) und/oder der Obergriff (14) der Klemmzange (12) und/oder ihre Aufhängung wenigstens eine Sollbruchstelle bildet oder aufweist.

13. Biegemaschine nach Anspruch 12, dadurch gekennzeichnet, daß die Sollbruchstelle oder die Sollbruchstellen (24, 25) zwischen einem leicht ersetzbaren Teil der Klemmzange (12) und deren übrigen Teilen oder dem Manipulator (11) angeordnet ist.

14. Biegemaschine nach Anspruch 12 oder 13, dadurch gekennzeichnet, daß die Sollbruchstelle (24) durch eine entsprechend schwache oder geschwächte Befestigungsschraube zum Anbringen des Untergriffes (13) an der Schiebeführung (22) oder an dem Führungsteil des Untergriffes gebildet ist.

15. Biegemaschine nach einem der Ansprüche 12 bis 14, dadurch gekennzeichnet, daß der Obergriff (14) mit einer oder mehreren schwach bemessenen oder mit Sollbruchstellen versehenen Schrauben an seiner Halterung befestigt ist.

16. Biegemaschine nach einem der Ansprüche 1 bis 15, dadurch gekennzeichnet, daß die oberhalb der Werkstück- und Bearbeitungsebene (4) angeordnete Aufhängung und Lagerung für den Manipulator (11) mit dem Maschinengestell (26) der Biegemaschine (1) direkt oder indirekt verbunden ist oder einen eigenen Ständer (27) aufweist, der im Bereich der Aufstellfläche mit dem Maschinengestell (26) in eine definierte Abstandslage gebracht und dort vorzugsweise fixiert ist.

17. Biegemaschine nach einem der Ansprüche 1 bis 16, dadurch gekennzeichnet, daß das Maschinengestell (26) und der Halteständer (27) für den Manipulator (11) jeweils unabhängig voneinander feste Standorte auf einem gemeinsamen oder zwei in vorgegebenem Abstand angeordneten Fundamenten oder dergleichen haben.

18. Biegemaschine nach einem der Ansprüche 1 bis 17, dadurch gekennzeichnet, daß an dem Maschinengestell (26) oder dem Ständer (27) an einem horizontalen Führungsträger (28), der insbesondere parallel zu einer Bearbeitungsseite eines Werkstückes (2) verläuft, ein weiterer horizontaler, jedoch rechtwinklig zu diesem Führungsträger (28) angeordneter Führungsbalken (29) angeordnet ist, der über einen Tragschlitten (30) mit dem Führungsträger (28) verbunden ist und seinerseits einen horizontal verschiebbaren Verstellschlitten (31) trägt, an dem ein vertikal verstellbarer Halteschlitten (32) angeordnet ist, an welchem die Klemmzange (12) drehbar gelagert ist.

19. Biegemaschine nach Anspruch 18, dadurch gekennzeichnet, daß an den Schlitten und/oder Schiebeführungen Weggeber und an der Drehlagerung der Klemmzange (12) ein Drehgeber (34) angeordnet und diese Geber mit der Steuerung der Bearbeitungsmaschine (1) verbunden sind.

20. Biegemaschine nach einem der Ansprüche 1 bis 19, dadurch gekennzeichnet, daß für die Verstellung der beiden horizontal verstellbaren Schlitten spielfreie elektrische Direkt-Linearantriebe (35) vorgesehen sind.

21. Biegemaschine nach einem der vorstehenden Ansprüche, dadurch gekennzeichnet, daß sie wenigstens einen weiteren Manipulator (11) mit Klemmzange (12) aufweist, der insbesondere an demselben Führungsträger (28) angeordnet ist.

## Claims

1. Bending machine (1) for workpieces (2) in sheet or plate form, for producing bent edges (3), having a horizontal workpiece support (4) and a bending tool (6) having a bending bar (9), and having a member (10) for holding the workpiece (2) down, arranged close to the bending tool (6), the bending machine (1) having at least one manipulator (11) with a clamping claw (12) for gripping the workpiece (2), the clamping claw (12) having a lower handle (13) and an upper handle (14) which is vertically movable in particular relative to the lower handle in the position of use, and being movable substantially in the plane of the workpiece (2) or in a parallel plane thereto transversely or at right angles to the edge (3) of the workpiece (2) which is to be machined, or transversely or at right angles to the tool (6), and enabling the workpiece (2) to rotate about a vertical axis, characterised in that the manipulator (11) is arranged and mounted above the machining plane of the workpiece (2) and in that the clamping claw (12), in addition to being movable transversely or at right angles to the holding member (10), is also displaceable parallel to this holding member (10) and is mounted to be rotatable about a spindle (15) extending at right angles to the plane of the workpiece.

2. Bending machine according to claim 1, characterised in that the clamping claw on the manipulator (11) and/or the upper handle (14) of the clamping claw (12) and/or the entire manipulator (11) is movable in a direction at right angles to the machining plane, and in particular can be raised upwards.

3. Bending machine according to claim 1 or 2, characterised in that it has one or more removal points (18) for workpieces (2) in sheet or plate form, which are arranged within the range of movement of the manipulator (11) and/or the clamping claw (12) and accommodate the workpieces (2) which have, in particular, already been aligned.

4. Bending machine according to one of claims 1 to 3, characterised in that the upper handle (14) is spaced from the lower handle (13) of the clamping claw (12) forming a space (20) for accommodating even a profiled edge (3) of the workpiece (2) when the clamping claw (12) is closed and in that, in order to open up this space (20), relative to the closed position, the lower handle (13) can be moved out of the vicinity of the upper handle (14) and this space.

5. Bending machine according to claim 4, characterised in that in order to release the workpiece (2) and free the space (20), the lower handle (13) is pivotable relative to the upper handle (14) in the horizontal direction about a vertical axis laterally with respect to the space or is movable as a whole substantially parallel to the workpiece support (4).

6. Bending machine according to one of claims 1 to 5, characterised in that the upper handle (14) is vertically movable relative to the lower handle (13), particularly with respect to the lower handle which can be pushed horizontally for opening, in order to produce a clamping force.

7. Bending machine according to one of claims 1 to 6, characterised in that the clamping claw (12) has at least two spaced-apart clamping points.

8. Bending machine according to claim 7, characterised in that the upper handle (14) of the manipulator (11) or of the clamping claw (12) comprises at least two clamping dies (14a) which are vertically movable for clamping and releasing, or of a clamping rocker with two clamping points and a clamping cylinder acting thereon.

9. Bending machine according to one of claims 1 to 8, characterised in that the lower handle has an undivided contact surface (13a) which has, in particular, a raised or elevated mating surface (13b) for the clamping die (14a) in the region of the or each clamping die (14a) of the upper handle (14).

10. Bending machine according to one of claims 1 to 9, characterised in that the lower handle (13) which is movably guided relative to the upper handle (14) in the horizontal direction has a substantially C- or U-shaped contour together with its sliding guide, the inside of the C or the reclining U forming at least part of the space (20) of the clamping claw (12) and the lower arm which is substantially horizontal in the position of use forming the actual lower handle and the upper arm forming the guide part (22) of the lower handle (13) and the rigid connection of the lower handle (13) for its suspension or slidable mounting.

11. Bending machine according to one of claims 1 to 10, characterised in that the lower handle (13) is rounded or chamfered on its underside relative to the directions of movement, in the manner of a ski or runner.

12. Bending machine according to one of claims 1 to 11, characterised in that the lower handle (13) and/or the upper handle (14) of the clamping claw (12) and/or its suspension means constitute or have at least one frangible point.

13. Bending machine according to claim 12, characterised in that the frangible point or points (24, 25) is or are located between an easily replaceable part of the clamping claw (12) and the other parts thereof or the manipulator (11).

14. Bending machine according to claim 12 or 13, characterised in that the frangible point (24) is formed by a suitably weak or weakened fixing screw for attaching the lower handle (13) to the sliding guide (22) or to the guide portion of the lower handle.

15. Bending machine according to one of claims 12 to 14, characterised in that the upper handle (14) is attached to its mount by one or more undersized screws or screws having frangible points.

16. Bending machine according to one of claims 1 to 15, characterised in that the suspension and mounting means for the manipulator (11) arranged above the workpiece and machining plane (4) is directly or indirectly connected to the machine frame (26) of the bending machine (1) or has its own stand (27) which is brought into a position at a specific spacing from the machine frame (26) in the region of the installation surface and is preferably secured there.

17. Bending machine according to one of claims 1 to 16, characterised in that the machine frame (26) and the holding stand (27) for the manipulator (11) each have fixed locations independently of one another on a common plinth or on two plinths or the like arranged at a given spacing from one another.

18. Bending machine according to one of claims 1 to 17, characterised in that, mounted on the machine frame (26) or the stand (27) on a horizontal guide carrier (28), which runs in particular parallel to a machining side of a workpiece (2), there is another horizontal guide bar (29), but at right angles to this guide carrier (28), which is connected to the guide carrier (28) via a carrying sled (30) and in turn carries a horizontally movable displacement sled (31) on which is mounted a vertically adjustable holding sled (32) on which the clamping claw (12) is rotatably mounted.

19. Bending machine according to claim 18, characterised in that motion indicators are mounted on the sled and/or sliding guides and a rotation indicator (34) is mounted on the rotary mounting of the clamping claw (12) and these indicators are connected to the controls of the machining apparatus (1).

20. Bending machine according to one of claims 1 to 19, characterised in that electrical direct linear drives (35) free from play are provided for the movement of the two horizontally movable sleds.

21. Bending machine according to one of the preceding claims, characterised in that it comprises at least one other manipulator (11) with a clamping claw (12) which is mounted, in particular, on the same guide carrier (28) .

## Revendications

1. Machine à plier (1) pour pièces (2) en forme de plaques, destinée à produire des bords pliés (3), comprenant un porte-pièce (4) horizontal, un outil de pliage (6) présentant une poutre de pliage (9), ainsi qu'un serre-flan (10) pour la pièce (2), qui est placé près de l'outil de pliage (6), machine à plier (1) qui comporte au moins un manipulateur (11) possédant une pince (12) pour saisir la pièce (2), laquelle pince (12) présente une branche inférieure (13) et une branche supérieure (14) qui est en particulier déplaçable verticalement par rapport à la branche inférieure en position d'utilisation, la pince étant déplaçable à peu près dans le plan de la pièce (2) ou dans un plan parallèle à lui, transversalement ou à angle droit par rapport au bord (3) à façonner de la pièce (2), ou transversalement ou à angle droit par rapport à l'outil (6), et permettant une rotation de la pièce (2) autour d'un axe vertical, **caractérisée** en ce que le manipulateur (11) est agencé et supporté au-dessus du plan de façonnage de la pièce (2) et que la pince (12), en plus de sa mobilité transversalement ou à angle droit par rapport au serre-flan (10), est également déplaçable parallèlement à ce serre-flan (10) et est monté rotatif autour d'un axe (15) perpendiculaire au plan de la pièce.

2. Machine à plier selon la revendication 1, caractérisée en ce que la pince sur le manipulateur (11) et/ou la branche supérieure (14) de la pince (12) et/ou tout le manipulateur (11) est déplaçable dans une direction perpendiculaire au plan de façonnage, en particulier par soulèvement.

3. Machine à plier selon la revendication 1 ou 2, caractérisée en ce qu'elle présente un ou plusieurs points de retrait (18) pour retirer des pièces (2) en forme de plaques, qui sont agencés dans la zone de mobilité du manipulateur (11) et/ou de la pince (12) et contiennent les pièces (2) à façonner respectives, en particulier dans une position correspondant déjà à l'orientation voulue.

4. Machine à plier selon une des revendications 1 à 3, caractérisée en ce que la branche supérieure (14) présente, vis-à-vis de la branche inférieure (13) de la pince (12), un espace libre (20) qui permet d'entourer également un bord (3) profilé de la pièce (2) alors que la pince (12) est fermée, et que, pour l'ouverture de cet espace libre (20), la branche inférieure (13) peut être écartée, par rapport à la position de fermeture, de la zone de la branche supérieure (14) et de cet espace libre.

5. Machine à plier selon la revendication 4, caractérisée en ce que, pour libérer la pièce (2) et dégager l'espace libre (20), la branche inférieure (13) peut être amenée, par rapport à la branche supérieure (14) par pivotement horizontal autour d'un axe vertical, à côté de l'espace libre ou être déplacée par translation, dans son ensemble, à peu près parallèlement au porte-pièce (4).

6. Machine à plier selon une des revendications 1 à 5, caractérisée en ce que, pour produire une force de serrage, la branche supérieure (14) est déplaçable verticalement par rapport à la branche inférieure (13), en particulier par rapport à une branche inférieure qui est déplaçable horizontalement en translation pour l'ouverture.

7. Machine à plier selon une des revendications 1 à 6, caractérisée en ce que la pince (12) présente au moins deux points de serrage mutuellement espacés.

8. Machine à plier selon la revendication 7, caractérisée en ce que la branche supérieure (14) du manipulateur (11) ou, plus exactement, de la pince (12), est formée d'au moins deux poinçons de serrage (14a) déplaçables en direction verticale pour le blocage et la libération de la pièce, ou d'une bascule de serrage présentant deux points de serrage et d'un vérin de serrage agissant sur la bascule.

9. Machine à plier selon une des revendications 1 à 8, caractérisée en ce que la branche inférieure a une surface d'appui (13a) non divisée, qui présente en particulier, dans la zone du poinçon de serrage ou de chaque poinçon de serrage (14a) de la branche supérieure (14), une face antagoniste (13b) surélevée ou rehaussée pour le poinçon de serrage (14a).

10. Machine à plier selon une des revendications 1 à 9, caractérisée en ce que la branche inférieure (13), guidée pour pouvoir coulisser en direction horizontale par rapport à la branche supérieure (14), possède, ensemble avec sa partie de guidage en coulissement, un contour de forme à peu près en C ou en U, l'intérieur du C ou du U couché formant au moins une partie de l'espace libre (20) de la pince (12) et l'aile inférieure, à peu près horizontale en position d'utilisation, formant la branche inférieure proprement dite, l'aile supérieure du C ou du U formant la partie de guidage en coulissement (22) de la branche inférieure (13), de même que la liaison rigide en flexion de la branche inférieure (13) à sa suspension ou pièce de support coopérante pour le guidage en coulissement.

11. Machine à plier selon une des revendications 1 à 10, caractérisée en ce que le dessous de la branche inférieure (13) est arrondi ou biseauté en forme de patin vis-à-vis des directions de mouvement.

12. Machine à plier selon une des revendications 1 à 11, caractérisée en ce que la branche inférieure (13) et/ou la branche supérieure (14) de la pince (12) et/ou leur surpension forme ou présente au moins un point de rupture prévu intentionnellement.

13. Machine à plier selon la revendication 12, caractérisée en ce que le point de rupture ou chacun des points de rupture (24, 25) est disposé entre une partie facilement remplaçable de la pince (12) et les autres parties de celle-ci ou du manipulateur (11).

14. Machine à plier selon la revendication 12 ou 13, caractérisée en ce que le point de rupture (24) est formé par une vis de fixation ayant une résistance faible ou affaiblie selon les besoins, servant à la fixation de la branche inférieure (13) sur sa partie de guidage en coulissement (22) ou prévue sur cette partie de guidage.

15. Machine à plier selon une des revendications 12 à 14, caractérisée en ce que la branche supérieure (14) est fixée à son support par une ou plusieurs vis de faible résistance ou pourvues de points de rupture prévus intentionnellement.

16. Machine à plier selon une des revendications 1 à 15, caractérisée en ce que la suspension/monture du manipulateur (11), agencée au-dessus du plan (4) de la pièce et de façonnage, est reliée directement ou indirectement au bâti (26) de la machine à plier (1) ou présente un montant autonome (27) disposé dans la zone de la surface d'installation à un emplacement situé et à une distance définie par rapport au bâti (26) de la machine, où il est de préférence fixé.

17. Machine à plier selon une des revendications 1 à 16, caractérisée en ce que le bâti (26) de la machine et le montant de support (27) du manipulateur (11) ont des emplacements fixes indépendants l'un de l'autre sur une fondation commune ou sur deux fondations ou dispositifs analogues placés à une distance préfixée l'un de l'autre.

18. Machine à plier selon une des revendications 1 à 17, caractérisée en ce que le bâti (26) de la machine ou le montant (27) est pourvu d'un support-guide (28) horizontal, s'étendant en particulier parallèlement à un côté à façonner d'une pièce (2), sur lequel est agencée une autre poutre de guidage (29) horizontale, mais orientée à angle droit par rapport à ce support-guide (28), auquel elle est reliée par un coulisseau porteur (30), la poutre (29) portant elle-même un coulisseau de positionnement (31), déplaçable horizontalement, sur lequel est installé un coulisseau porte-pince (32) mobile verticalement et sur lequel la pince (12) est montée rotative.

19. Machine à plier selon la revendication 18, caractérisée en ce que des capteurs de déplacement sont installés sur les coulisseaux et/ou leurs glissières et qu'un capteur de position angulaire (34) est installé sur le dispositif de montage en rotation de la pince (12), et ces capteurs sont connectés à la commande de la machine à façonner (1).

20. Machine à plier selon une des revendications 1 à 19, caractérisée en ce que des commandes linéaires directes (35) de type électrique et sans jeu sont prévues pour le déplacement des deux coulisseaux mobiles horizontalement.

21. Machine à plier selon une des revendications précédentes, caractérisée en ce qu'elle comporte au moins un autre manipulateur (11), possédant une pince (12), qui est agencé en particulier sur le même support-guide (28).
